# EUROPEAN PATENT SPECIFICATION

(11) **EP 1 791 695 B1**
(45) Date of publication and mention of the grant of the patent: **28.05.2008**
(21) Application number: 05728938.1
(22) Date of filing: 23.03.2005
(51) Int. Cl.: B32B 27/32, G09F 3/10

(54) **COATING FOR POLYMERIC LABELS**
ÜBERZUG FÜR POLYMERE ETIKETTEN
REVÊTEMENT POUR ÉTIQUETTES POLYMÈRES

(30) Priority: 24.08.2004 US 925293
(43) Date of publication of application: 06.06.2007
(73) Proprietor: ExxonMobil Oil Corporation, Irving TX 75039-2298 (US)
(72) Inventor: MCGEE, Dennis, E., Penfield, NY 14526 (US)
(74) Representative: Troch, Geneviève
(86) International application number: PCT/US2005/009744
(87) International publication number: WO 2006/022861

(56) References cited:
- US-A1- 2004 126 514

## Description

### Background of the Invention

The present invention relates to polymeric labels and, more specifically, to polymeric labels that can be applied to bottles, containers, and other surfaces using water-based adhesives.

Polymeric labels are applied to a variety of bottles, containers and other surfaces to provide, for example, information about the product being sold or to display a trade name or logo. Polymeric labels can provide various advantageous characteristics not provided by paper labels, such as durability, strength, water resistance, curl resistance, abrasion resistance, gloss, translucence, and others.

U.S. Patent 5,194,324 issued to Poirier teaches the use of an opaque, biaxially oriented polymeric label stock structure. This structure includes an opaque thermoplastic polymer matrix core layer, a high-gloss medium-density polyethylene first skin layer, and a second thermoplastic polymer skin layer with an adhesive on its surface. The core layer has a stratum of voids that gives the structure its opacity. Poirier discloses that the adhesive could be pressure sensitive, activated by water, or activated by solvent. However, as described in more detail below, label substrates of this kind are unsuitable for some types of conventional manufacturing techniques and uses.

For example, the application of cut paper labels to glass and plastic containers using water-based adhesives is still one of the most prevalent labeling techniques. Consequently, there are many existing machines that have been installed for this type of labeling. These cut-label/patch-label labeling techniques using water-based adhesives work well with paper-based labels applied to glass, plastic, or metal substrates, because the wet adhesive wicks into and through the paper label. This release of the adhesive moisture through the labels allows the adhesive to dry fully. This technique does not work, however, on polymeric labels, as described in U.S. Patent 5,194,324, because the polymeric label does not permit wicking of the moisture from the adhesive when used as a decal on a window or a patch-label on a container. This can make the polymeric labels adhered with cold-glue type adhesives prone to "swimming" or moving from the desired label location during downstream processing.

Polymeric label substrates having micro perforations to enhance the rate at which water trapped between the label and the substrate can evaporate have had little success. Initial wet tack with commercially available water-based adhesives remained inadequate. Moreover, the micro perforations tend to permit the passage of wet glue through the pores rendering the printed side of label on the container sticky and marring the graphics.

It is known in the art to construct a multilayer film having a cavitated layer on the wet-adhesive-receiving surface of the film and/or a less-cavitated or non-cavitated layer on the ink or print receiving surface of the film. These films can offer fair performance as labels when attached to containers with aqueous-based cold glues. However, these films are known to have manufacturing and processing issues. For example, these films may perform poorly in printing presses that require substrates in sheet form. In particular, the conversion of these films from roll stock into unprinted sheets, and the stacking of the sheets and subsequent feeding through a printing press may present difficulties. Moreover, such voided substrates have been shown to be prone to distort after printing due to interactions between the polymer film substrate and the residual solvents found in printing inks and overlacquers.

To enhance printability or adhesive bonding, it is known to treat or apply a coating to one or both surfaces of a film. Such treatments may include flame, plasma and corona treatment, and such coatings may include, for example, an acrylic coating for a print-side surface and a hydrophilic clay particulate coating on the adhesive-receiving surface of the film. U.S. patent application 10/335,612, by Kirk, et al., published on July 1, 2004, entitled "Coating for the Adhesive-Receiving Surface of Polymeric Labels," discloses a coated polymer film label comprising an open-cell voided polymer first skin layer on an adhesive-receiving side of the film, a core layer, a printable, treated, closed-cell voided, second skin layer, and a very thin inorganic coating on an exterior surface of the adhesive-receiving, first skin layer. While the thin inorganic layer helps to process rolls of polymeric film into sheets, such coatings do not prevent and in some instances may even promote unfavorable interactions with ink solvents and the adhesive-receiving surface of the adjacent film that can cause blocking, puckering, and/or ghosting after printed labels are stacked in sheets or die-cut to the desired size and shape for the containers.

The interaction between ink solvents, treated and/or cavitated polymeric layers, and coatings on polymeric label stock is a manufacturing, converting, and processing issue that manifests itself when printers try to increase throughput above an acceptable processing rate threshold. Faster press speeds with, for example, gravure inks cause retained solvents in the printed labels to be higher. If the solvent tackifies the coatings on either side of the label, blocking could be seen in finished sheets, especially after die-cutting. In another case, moving labels printed with oxidizing lithographic inks more quickly through the processing cycle can result in similar blocking problems if inks have not completely cured. UV-curable inks and over-lacquers also possess solvent-like characteristics before they are cured or if they are incompletely cured.

High-speed printing problems may also occur with use of some lithographic inks or over-lacquers used for printing oriented polymeric label stock, especially when one side of the oriented polymeric label has an open-cell structure. At high printing speeds, the combination can produce base-sheet distortion caused by partial absorption of some of the solvent or UV-curable monomers from the adjacent ink printed layer by the oriented polymeric substrate. Absorbed materials can cause oriented domains in the polymeric label stock to relax. The resulting printed film product may exhibit an illusion of an embossed or reverse-embossed appearance, depending in degree upon the ink or lacquer color, density, and type.

U.S. Patents 6,306,242 and 6,517,664 issued to Dronzek attempted to improve moisture uptake and dissipation from adhesives by applying a hydrophilic polymeric coating layer (0.40 to 13 g/m²) to the polymeric label to absorb a portion of the water from the water-based adhesive. Dronzek selected hydrophilic materials having the necessary water absorbtivity, initial wet tack, and drying properties that permit the coated polymer film to be applied to polymeric, glass, or metal containers via water-based wet labeling techniques on standard paper label equipment. Sodium polyacrylate, which was Dronzek's especially preferred hydrophilic material, is insoluble in water, but this cross-linked material swells and traps many times its own weight in water. However, such hydrophilic materials or coextruded hydrophilic layers can absorb water from the atmosphere in humid conditions, as are commonly found in bottling and labeling plant environments, thereby causing curling problems, misfeeding problems, increased blocking, and hindering the ability of the hydrophilic layer to bond with the adhesive layer. Additionally, the hydrophilic layer can lose water to the atmosphere if conditions become drier resulting in label distortion and misfeeding problems. The gain and loss of moisture in hydrophilic labels cause the label to unpredictably and prematurely curl, especially since the hydrophilic coating cannot be applied also to the print face in a balanced application, for it would lack durability on a wet bottling line as the coated surface bumped into rails and other bottles. Curl is always a potential issue when polymeric films are asymmetrically coated. Humidity or thermally induced curl can create severe processing problems when converting roll stock into sheets or applying labels to bottles. Furthermore, other hydrophilic coatings can become tacky in humid environments. This can cause labels to block or stick together during die-cutting or dispensing, resulting in misfeeds and mishandling problems resulting in increased machine downtime.

The prior art teaches applying a hydrophilic coating (having the general properties previously described by Dronzek) to the adhesive-receiving side of a substrate with a porous surface and applying a different type of ink receptive coating on the opposite surface of such films to enhance printability. Thereby, to the extent possible, polymeric films may be made to attempt to functionally emulate the favorable moisture handling characteristics of the paper labels that the polymeric label products are replacing, while providing the durability advantages offered by a polymeric label as opposed to paper labels.

Attempts have been made to arrest some of the hypersensitivity of hydrophilic coatings to humidity, wet environments, and high speed presses, by adding cross-linkers to the hydrophilic coatings to increase the coating integrity and to chemically tie-up some of the coating's functional groups that are reactive with water or solvents. However, such cross-linker systems tend to be complex, require highly customized formulations, are costly and may provide only modest performance improvements, thus failing to provide a widely effective solution.

Additionally, the prior art teaches use of a relatively heavily cavitated cold-glue adhesive-receiving layer/surface to further aid water-based adhesive persistence, initial wet-tack and moisture dissipation. It is also known to use the same in conjunction with the hydrophilic coatings. Although such methods benefited from the cross-linkers and enhanced cavitation, such enhancements have resulted in additional problems, including film/label blocking and sticking together subsequent to printing and/or subsequent to die-cutting operations, wherein the edges of adjacent labels bond together. Such issues cause substantial waste and lead to major problems in label feeding and handling during labeling and bottling operations, resulting in substantial equipment jamming, downtime, mislabeled products, and substantial loss of production efficiency and increased costs.

There remains in the art need for a polymeric label that can be applied using conventional, converting, printing, cutting, handling, and labeling equipment in conjunction with common inks, aqueous fountain solutions, solvents, coatings, and adhesives without the aforementioned drawbacks. The solution to these problems should ideally also provide improved machinability and processing characteristics that will permit printed polymeric label/cold-glue adhesive combinations to be efficiently processed and handled along the chain of use, providing good initial tack and long-term bonding characteristics, including prolonged immersion of labeled products in ice chests. Moreover, in some cases it would also be desirable if the same coating could be used for both the adhesive-receiving layer and the printing surface, for this would eliminate the need to inventory two coatings and facilitate a more nearly symmetrically coated label to minimize curl caused by changes in temperature and humidity. Such a coating also needs to deliver good ink adhesion, wet-scratch resistance, and wet-abrasion resistance to withstand the rigors of a bottling line.

### Summary of the Invention

The present invention relates to thermoplastic film, including polymeric film labels, which is coated on at least one side with at least one polymer that contains fillers. Representative polymeric film substrates suitable for coating applications and uses consistent with this invention may typically comprise a first skin layer, a core layer, and a second skin layer, respectively. More particularly, this invention provides labels coated with a coating comprising a sub-micron hydrophobic filler for use with cold-glue type adhesives. The coatings and processes according to this invention provide desirable initial wet-tack, drying, and adherence properties for many bottle and container-labeling applications.

Additionally, the present invention describes coatings that afford functional properties that render the coating useful on either or both sides of the label. Such coatings may be applied to the adhesive-receiving surface of a patch-label and/or the print-receiving surface of the same label, offering a printable surface having wet-abrasion and scratch resistance. Surprisingly, and contrary to teachings of prior art, the inventive coating formulation overcomes the drawbacks of the prior art and provides advantages not previously available for use with wet-based (water- or solvent-based) inks and adhesives. Thereby, this invention may reduce the manufacturing, converting, and processing difficulties encountered in the prior art when using water-based adhesives and/or solvent-based inks and/or over-lacquers in combination with a polymeric label.

Coating formulations and coated polymeric-based labels/films are provided that may afford improved performance during converting, printing, die-cutting, and use. The subject coating formulations and uses render coated polymeric labels/films resistant to the detrimental effects suffered by prior art hydrophilic coatings, while maintaining the desirable adhesive properties and other advantages afforded by polymeric labels over paper labels.

Contrary to the teachings of prior art that polymeric label coatings must exhibit hydrophilic properties, it is taught herein that applying a coating containing hydrophobic components provides a number of desirable properties, while avoiding many of the drawbacks of hydrophilic coatings. Coatings containing hydrophobic components may render a coated label or film that is resistant to ink, adhesive, and/or over-lacquer degradation and label deformation due to exposure to water, solvents, or adhesives.

The water-resistant and solvent-resistant coating formulations according to this invention comprise a filler component and a binder component, at least one of which is substantially hydrophobic. The filler component may be organic, inorganic, synthetic or natural, and in some embodiments is a clay-type material that is preferably hydrophobic but which in other embodiments may be hydrophilic, such as where the binder component is hydrophobic. The binder component that supports the filler component, may be water- and/or solvent-resistant, depending upon the desired coating application. The hydrophobic component facilitates resistance to degradation from exposure to solvent and/or water, and when applied to a polymeric label will facilitate higher-throughput printing operations due to reduced blocking, sticking, puckering, and ghosting of printing images between adjacent layers of labels or film. Previous to this invention, the occurrence of such problems have been limiting factors to the speed of label/film printing, converting, die-cutting, sheet feeding, and label application/gluing operations. The coating formulations and techniques according to this invention may be useful as an adhesive side coating and/or as a print-side coating for a polymer film substrate or on a container surface. The improvements facilitate reduced blocking after printing and die-cutting, and improved performance for both sheet-to-sheet and roll-to-sheet processing. Coatings according to this invention also afford good static-dissipation properties, further reducing processing and utilization limitations and problems.

Further, after a standard drying time, labels coated according to this invention demonstrate desirable label adhesion following immersion in an ice chest. Coatings according to this invention may also prevent label curl, puckering, deformation, ghosting, and/or deorientation due to printing ink/solvent interaction with the printed substrate.

The present invention includes articles, such as containers, having coated thermoplastic film labels applied to a surface of the container using a water-based adhesive.

The coated thermoplastic film labels of the present invention provide several advantages over currently used paper and polymeric labels.

These and other objects, features and advantages are discussed in the following detailed description.

### Detailed Description of the Invention

This invention comprises films coated on at least one side with a coating formulation possessing at least one hydrophobic-behaving component therein, yielding a coated polymeric-based film exhibiting hydrophobic behavior or properties. Such hydrophobic behavior or properties may be beneficial during at least one or more of: i) converting, such as printing, sheeting, die-cutting, and further coating; ii) uses/applications, such as labeling, packaging, applying adhesive, and application of the adhesive-containing label to a container, such as a bottle; and iii) subsequent handling and use, such as ice-chest immersion and wet scratch resistance.

Coating formulations according to this invention comprise at least a filler component and a binder component, wherein at least one of these two components has substantially hydrophobic wetting properties and is thereby resistant to water degradation. In addition to the coating being resistant to degradation from water, the coating formulations are also resistant to solvent degradation. As described in more detail below, solvent resistance is typically imparted by the binder components, such as binders that are crosslinked using a crosslinker or which self-adhere, such as through polar bonding or self-crosslinking. Many embodiments of the coating composition comprise a combination of hydrophobic polymer binders, filled primarily with hydrophobic filler particles, and including minor amounts of other additives, such as another polymer compound, organic or inorganic particles, silica gel, and/or other known formulating and processing additives, such as wetting agents, surfactants, security taggants, pH modifiers, and buffering agents.

The term "hydrophilic," as used herein, means to be readily wettable by water, having relatively low advancing contact angles with water, (e.g., less than about 45°) thereby being capable of binding or absorbing water. "Hydrophobic," as used herein, is also defined to mean anything other than hydrophilic, including being water resistant or not being readily water wettable.

Other coating formulations according to this invention comprise a hydrophobic binder, as described herein, in combination with a hydrophilic filler, with the binder thereby imparting a predominant portion of the water resistance, solvent resistance, and the wet-scratch resistance, while the filler imparts moisture transmission through the coating. What is important is that the combination of filler plus binder together render the coating resistant to degradation from fluid contact when the coating is applied to the adhesive-receiving surface, and resistant to wet-scratch damage when the coating is applied to the print surface. The filler may be hydrophobic or hydrophilic, but the combination of filler and binder together impart both hydrophobicity and resistance to degradation from solvents. Thus, in many embodiments, the binder component is resistant to both water and solvents. However, in embodiments where the filler is substantially hydrophobic, the binder material need not be as hydrophobic in nature and in some embodiments may permissibly contain some hydrophilic components or may be substantially hydrophilic but comprise a crosslinker to improve solvent resistance. Also, in all coating embodiments applied to the adhesive-receiving surface of a film, the filler component must be present, but in some embodiments, the filler component need not be present in the coating used on the print face, even though the binder is the same one utilized on the adhesive receiving surface.

This invention also includes a method of labeling an article with a resistant coated polymeric label using a cold glue adhesive comprising the steps of: a) providing an article comprising a labeling surface; b) providing a polymeric label substrate having a first side and a second side, wherein the first side is an adhesive-receiving side; c) applying a first coating to the first side of the polymeric label substrate, the coating comprising at least a filler component and a binder component, wherein at least one of the filler component and the binder component is substantially hydrophobic; d) thereafter applying a cold glue adhesive to the coating; and e) thereafter applying polymeric label to the article to produce a labeled article. The coating is resistant degradation from both water and solvent and may be defined for purposes herein as a "resistant coating" or a "water- and solvent-resistant coating". The term "coating" as used herein, thus refers to a coating formulation that is both water resistant and solvent resistant.

In a cold-glue labeling film embodiment possessing at least a core layer and opposing skin layers, the coating according to this invention may be applied to the cold-glue adhesive-receiving first side of the first skin layer. This coating preferably comprises at least one polymer of the group comprising acrylics, urethanes, hardened epoxies, alkyds, polystyrene copolymers, poly(vinylidene chloride) copolymers, butadiene copolymers, vinyl ester copolymers, nitrocellulose, and olefin copolymers, cross-linked, if necessary, to render them resistant to water and polar ink solvents (alcohols, esters, and ketones). This coating also comprises at least 30 percent, or preferably at least 45 percent, and more preferably at least 60 percent by weight of preferably sub-micron size (meaning a particle mean diameter of equal to or less than about 1.0 micron) inorganic or organic filler materials. Suitable fillers comprise clay materials, natural minerals, surface-treated natural minerals, synthetic minerals, surface-treated synthetic minerals, plastic or thermoplastic pigments or particulates, similar materials, and mixtures therof.

Preferably, the water- and solvent-resistant coating for the adhesive-receiving side has a coating weight in the range of about 0.4 g/m² to about 4.0 g/m², or more preferably, a coating weight in the range of about 0.6 g/m² to about 2.5 g/m², or still more preferably, a coating weight in the range of about 0.8 g/m² to about 2.0 g/m². Coating weights may be slightly higher when the coating is used on the print side as compared to weights on the adhesive-receiving side. Print-side weights may be as high as about 8 g/m², but practical and economic factors make the preferred ranges for the print-side coating, if used at all, the same as the preferred coating weights for the adhesive-receiving side. The water- and solvent-resistant coating preferably forms a continuous layer on the film surface, but may alternatively be applied in a pattern or non-continuous layer.

The preferred coating thickness in this invention is typically lower than the preferred thicknesses disclosed in examples 1 through 4 of U.S. Patent 6,517,664 (2.4 g/m² to 6.5 g/m²), as the coating of the '664 patent is hydrophilic and designed to readily absorb and/or contain some water and/or adhesive within the coating layer. Conversely, the coating formulations according to this invention do not appreciably absorb or contain the water and/or adhesive. Rather, the coatings according to this invention enhance the transmissibility of moisture through the coating layer to the adjacent polymer-receiving layer. The function of a coating material according to this invention is somewhat analogous to the function of size-exclusion chromatography beads; by reducing the available free volume in the chromatography column, larger molecules will elute ahead of smaller molecules. Likewise, with a somewhat porous hydrophobic matrix coated on the adhesive-receiving side of the film, hydrophilic materials like water will have less available free volume in the coated polymer layer and will readily penetrate through the coating to the voided/cavitated sub-layer of polymer film adjacent to the coated layer. In addition to enhanced initial wet-tack, the hydrophobic coating provides additional benefits including resistance to degradation of adhesives and printing inks by providing a water- and solvent-resistant protective coating. Solvent resistance is imparted by the binder components, such as by using a crosslinker, either as an additive component or a self-crosslinking polymer, with a hydrophobic or a hydrophilic binder, and/or using a binder that has polar properties against solvents in conjunction with a crosslinker to impart water resistance. Such benefits may provide improved ice chest immersion and wet scratch resistance, as discussed below in more detail. As used herein, the term "voided" is synonymous with the term "cavitated" as those terms are commonly understood within the art, referring to the creation of cavities, pores, or voids within a polymer film during orientation, whether using a void initiating agent or particle, such as calcium carbonate, or without a void initiating agent, such as orienting the beta-form of polypropylene to create voids.

The presence of the water- and solvent-resistant coating on the adhesive-receiving surface in a preferred amount improves the processability of sheets and labels after printing compared to uncoated films. Printed sheets jog and stack better. Blocking during die-cutting is reduced and printed sheets are deformed less due to interactions with ink solvents and the polymer. Coating layers that are too thin on the print side may not provide adequate resistance to residual ink solvents, and coating layers that are too thick on the glue side may interfere with the interaction between wet glue and the voided sub-layer adjacent the coating. Surprisingly, however, within the ranges taught herein, the coating of this invention does not interfere with cold-glue tack-up and still permits interaction between the wet glue and the voided sub-layer.

Solvent resistance can be determined by manually rubbing the coated film surface with twenty circular rubs using moderate finger pressure and a tissue soaked in a solvent, such as isopropyl alcohol, ethyl acetate, or methyl ethyl ketone. If the coating does not exhibit degradation, softening, removal or abrading from the solvent rubbing, then the coated surface is considered solvent resistant. A solvent resistant coated print-surface is less likely to become tacky or scratched when exposed to residual ink solvents than a coating that is broken down or abraded by the test solvents.

Similarly, as described in more detail in the Examples below, the hydrophobic nature of the coating can protect a printed substrate from water degradation, including resistance to scratching as demonstrated in a wet-scratch resistance test. If the printed coating or coated print-surface of the film yields good wet-scratch resistance on a non-voided plastic substrate (such as the second side of the second skin layer), then the print side coating is water-resistant. Flint ink company's "OS Label Lyte Process Black" lithographic ink or other commonly used oxidizing lithographic inks are suitable for wet-scratch screening. Preferred embodiments showed very little damage after labeled bottles were immersed thirty minutes in water followed by five minutes of jostling against other bottles and rails in an AGR Variable Speed Bottling Line Simulator. The water- and solvent-resistant coating of this invention is functionally dissimilar from the hydrophilic coatings of prior art. The hydrophobic coating of this invention is more resistant to degradation due to absorption of liquids than prior art hydrophilic coatings. Thus, the hydrophobic filled coatings of this invention are not as prone to humidity dependent curling as films coated with purely hydrophilic coatings, especially in symmetrically coated embodiments in which the coating on the adhesive-receiving layer is the same as the coating on the print face.

The coating according to this invention comprises at least two components: (a) a water- and solvent-resistant binder component, and (b) a filler component, at least one of which is hydrophobic. The two components are combined in a ratio such that the coating comprises at least 30 percent filler by weight, or preferably at least 45 percent filler by weight, and more preferably at least 60 percent filler by weight of the coating composition. When dry and, if necessary, cured (such as by UV light), the hydrophobic filled coating is largely unaffected by exposure to water or common ink solvents like alcohols, esters, and ketones. Suitable water- and solvent-resistant coatings can comprise cationic compositions, such as described in U.S. Patents 6,025,059; 6,596,379; and blends thereof. One specific example is a cationic dispersion of hydrophobic clay (MD125) manufactured by Michelman, Inc. blended with a water-based epoxy/hardener dispersion described by Steiner et al. in U.S. Patent 4,214,039.

In preferred embodiments of the invention, a substantial number of the particles of the filler materials, preferably a majority by weight, should have an average particle size or diameter that is equal to or less than about 1.0 micron, with equal to or less than about 0.8 microns being preferred. However, a substantial number of the filler particles, preferably a majority by number, should preferably have an average particle diameter of equal to or greater than 0.05 microns. The term "average diameter" is defined broadly to encompass substantially the average of any linear distance across or through a particle having a relatively low aspect ratio, or distance across the long-axis of particles having a high aspect ratio, such as a plate-like particle, or the nominal distance through a nominally spherical particle, as the filler particles may comprise substantially any shape. When applied over the inherently rough first/adhesive-receiving side of the first skin layer, filler materials provide enough effective porosity to allow moisture permeation and mechanical penetration of the water component of the wet glue and/or of the wet glue itself, through the coating layer to the voided sub-layer adjacent to the coating. Insufficient particulate loading or a coating layer that is too thick can diminish retained cold glue adhesion when labeled bottles are immersed in ice water.

Filler materials may be classified into two functional groups: hydrophilic and hydrophobic. Hydrophilic or hydrophobic particles will each provide sufficient interstitial porosity to the coating to allow penetration that enables good retained adhesion in an ice chest, as taught herein, provided there is sufficient filler particle loading. Hydrophilic fillers may include silicas, hydrophilic clays, barium sulfate, calcium carbonate, titanium dioxide, zinc oxide, tin oxide, aluminum oxide, talc, carbon black, a wide variety of organic and inorganic pigments that could be used to make coated films with a specific color, and mixtures of any two or more of the foregoing, having hydrophilic properties. They are hydrophilic because water readily wets the surface and intra-particle pores of these materials. With hydrophilic fillers, internal particulate pore volume or porosity can influence the ability of given fillers to absorb water. Hydrophilic filler materials may preferably have low porosity or are effectively non-porous. In the context of the present invention, hydrophilic filler particles with low porosity means porosity of less than 3 milliliters/gram (ml/g) of water uptake per gram of filler material, with less than 1.5 ml/g being preferred, and less than 0.5 ml/g being more preferred. Low-porosity and non-porous hydrophilic fillers have been found to provide better properties than their more porous counterparts.

In addition to those listed previously, hydrophobic fillers commonly include, but are not limited to, surface-modified clays, surface-modified silicas, and surface-modified titanium dioxide, which have been rendered water-resistant due to their surface modification with organic moieties. Examples of surface-modified clays include kaolinite clays sold under the trade name Kalophile-2^{™} by Dry Branch Kaolin Company and Lithosperse^{™} 7015 HS and 7005 CS by Huber Engineered Minerals. An example of surface-modified silica is Aerosil^{™} RX50 manufactured by Aerosil Nippon, in Japan. In accordance with the present invention, hydrophobic fillers are preferred, because it has been found, as demonstrated herein, that they offer better post-print blocking resistance during die-cutting and, when used on the print surface, these materials offer better wet-scratch resistance.

One can also include particulates in the coating formulation that are larger than 1.0 micron to control surface roughness. These larger particulates can be incorporated at up to 10 pph with particle diameters averaging between 1 and 8 microns, where "pph" stands for parts per hundred by weight of the total filled resin, e.g., the combination of the binder plus the filler.

McGee et al. (U.S. Patent 6,025,059) teaches that such anti-abrasive particulates improve wet-scratch resistance. While these particulates serve no critical purpose on the adhesive-receiving layer, they can be part of a symmetrically coated film that allows a single coating to be used in manufacturing for the adhesive-receiving layer and the print face. The presence of these particulates in the print face can also attenuate surface roughness, which can make sheeting, stacking, and feeding of sheets into a printing press more facile. Examples of suitable particulates that are commercially available include: Tospearl^{™} manufactured by Toshiba Silicones; Sylysia^{™} manufactured by Fuji Silysia; Epostar^{™} manufactured by Nippon Shokubai; and Techpolymer^{™} manufactured by Sekisui Plastics Co., Ltd.

Additional attenuation of the surface roughness of the adhesive-receiving layer can be accomplished by the addition of up to30, 35, or even 40 percent by weight of the dry coating composition, of particles having diameters between 10 and 200 microns. While not desirable for the print face, when included in the coating on the adhesive-receiving surface or applied to it (for example, by spraying), these very large particles facilitate the dispensing of labels on high-speed bottling lines. Zeeospheres^{™} 800 and 850 from 3M^{™}, 3M^{™} Glass Microspheres S15, S22, S32, S38, and S60, 3M^{™} Z-Light Spheres^{™} Ceramic Microspheres G-3125, and Honeywell^{™} ACumist^{™} A-12, A-18, and A-45, are examples of suitable materials.

One could also use non-ionic thickeners in the coating for the adhesive-receiving layer. By controlling viscosity with non-ionic thickeners such as polyvinyl alcohol, hydroxypropyl cellulose, or hydroxyethyl cellulose, one can also attenuate the roughness of the adhesive-receiving surface by controlling the size and shape of patterns in the applied coating. Such additives are generally undesirable in the printable surface, because they may compromise wet-scratch resistance.

The coating formulations according to this invention include a binder component in addition to the filler particulate component. Such coatings include a binder component that is resistant to both water and solvent degradation, regardless of whether the filler component is hydrophobic or hydrophilic. Examples of the water- and solvent-resistant binders include one or more polymers from the group comprising acrylics, urethanes, hardened epoxies, alkyds, polystyrene copolymers, poly(vinylidene chloride) copolymers, butadiene copolymers, vinyl ester copolymers, nitrocellulose, olefin copolymers, and mixtures thereof, cross-linked, if necessary, to render them resistant to water and polar ink solvents (alcohols, esters, and ketones). Depending upon the chemistry of the binder, one could incorporate one or more suitable cross-linking agents into the coating formulation selected from the group comprising zirconium salts of mineral acids, polyfunctional aziridine, zinc salts, zirconium salts, glyoxal, melamine-formaldehyde resins, polyfunctional isocyanates, polyfunctional amino compounds, polyfunctional vinyl compounds, and polyfunctional epoxy compounds. When carboxylated binders are used, inclusion of 0.5 to 10 parts polyfunctional aziridine, such as CX-100 from Avecia, per 100 parts of binder is preferred. For self-cross-linking cationic acrylic binders such as Darex^{™} R1117 XL from W. R. Grace, preferred cross-linking can be achieved by including for every 100 parts of cationic acrylic binder up to 100 parts epoxy/hardener blends described by Steiner et al. in U.S. Patent 4,214,039. Optionally, the epoxy-curing reaction can be further catalyzed by the inclusion of minor amounts of bases such as ammonia, ammonium bicarbonate, ammonium carbonate, sodium bicarbonate, sodium carbonate, propylene diamine, hexamethylene diamine, diethylene triamine, triethylamine tetramine, tetraethylene pentamine, polyethyleneimine, polypropyleneimine, tri(dimethyl aminomethyl) phenol, and 2-ethyl-4-methyl-1H-imidazole such that the pH of the coating formulation is between 5.0 and 8.0.

The coating formulations of this invention utilize a hydrophobic or hydrophilic filler component, and a binder component that is resistant to degradation by both water and solvents. The coating formulations for the adhesive-receiving layer (and, optionally, the print-face coating) can also contain a wide variety of optional substances including, but not limited to, wax emulsions, adhesion promoters, emulsifiers, anti-foams, defoamers, anti-static additives, security taggants, co-solvents, and other wetting or processing aids known to those skilled in the art.

Preferably, the coatings of this invention may be applied to substantially any mono or multilayer polymeric/thermoplastic film substrates, such as those comprising polypropylene, polyethylene, polybutylene, polylactic acid, and blends thereof. Such substrates make useful platforms from which to prepare polymeric-based labels and packaging films. It is also envisioned that such coating formulations may also be applied to non-extruded substrates, such as paper or spun-fiber.

The first side of the first skin layer (that is, the adhesive-receiving layer) has a filled coating that is resistant to solvents and water. Preferably, this coating has an application weight in the range of about 0.4 g/m² to about 4.0 g/m², or more preferably, a coating weight in the range of about 0.8 g/m² to about 2.0 g/m². A preferred coating thickness in this invention is lower than the preferred thicknesses of the hydrophilic coatings disclosed in Examples 1 through 4 of U.S. Patent 6,517,664 (2.4 g/m² to 6.5 g/m²), as the hydrophilic coating of that invention absorbs water and the coating of this invention does not.

The coatings, methods, and uses according to this invention are particularly useful in the preparation of cold-glue/wet-adhesive applied labels. The thermoplastic film labels of the present invention are coated on at least one side with at least one water- and solvent-resistant coating containing fillers, which are preferably hydrophobic and preferably sub-micron sized. The printed, cut, stacked, and coated labels can be applied to containers using wet/cold glue. Despite being resistant to water, the hydrophobic filled coating unexpectedly does not interfere with the tack-up or curing of the wet glue. With such glues, these coated labels unexpectedly retain good adhesive properties under various conditions, including wet, moist or humid environment conditions. Moreover, because these coatings are also resistant to solvents, post-print processing of the labels (die-cutting, for example) may be more robust than prior art polymeric labels.

In one embodiment, the label film comprises three layers; that is, a first skin layer on the adhesive-receiving side of the film, a core/interior layer and a second skin layer on the side of the core layer opposite the first skin layer. The first skin layer has a first side and a second side and includes a thermoplastic polymer that is preferably voided (i.e., cavitated). This first side preferably is intended for receiving both the coating according to this invention thereon, and subsequently, a cold-glue type adhesive on the coating. The first skin layer may preferably have an open-cell structure and in some embodiments is on the order of 3.8 to 6.4 microns (15 to 25 gauge units; 0.15 mil to 0.25 mil), thick. However, some substantially closed cell embodiments may also be suitable, wherein the surface is sufficiently rough or irregular to permit some superficial retention and penetration thereon of the cold-glue adhesive or moisture therefrom. Thermoplastic films and labels according to the present invention may typically have an overall thickness, including both skin layers, the core layers and any additional layers, of from about 25 to 250 microns (1 mil to about 10 mils), preferably from about 75 to 125 microns (3 mils to about 5 mils), with many embodiments comprising a three- to five-layer white opaque film. In some label film embodiments, the adhesive-receiving first skin layer makes up at least about 15 percent by weight of the film label. In another embodiment, the first skin layer comprises at least about 30 percent by weight of the film label. Preferably, the thermoplastic films useful according to this invention, including the label films, are biaxially oriented. In another embodiment, the films are uniaxially oriented.

The first skin layer comprises a polymer. In one embodiment, the thermoplastic polymer of the first skin layer, that is, the layer intended for contact with the coating and/or the adhesive, comprises polyolefins, including homo-, copolymers (including terpolymers and higher combinations of monomers, as used herein) of polypropylene and/or polyethylene. Examples of suitable polypropylenes include a standard film-grade isotactic polypropylene and/or a highly crystalline polypropylene. An example of a suitable polyethylene is high-density polyethylene. In another embodiment, the first skin layer comprises copolymers of polypropylene including comonomers of C₂ or C₄ to C₁₀ in an amount less than 50 percent by weight of the copolymer, and blends of said polypropylene homopolymers and polypropylene copolymers.

The first skin layer includes a first voiding agent to cavitate the layer during orientation. Examples of suitable cavitating agents for essentially any voided or cavitated layer includes polyamides, polybutylene terephthalate, polyesters, acetals, acrylic resins, nylons, solid preformed glass particles or spheres, hollow preformed glass particles or spheres, metal particles or spheres, ceramic particles, calcium carbonate particles, cyclic olefin polymers or copolymers (collectively, "COC's"), silicon dioxide, aluminum silicate and magnesium silicate and mixtures thereof. COC's are described in U.S. Patent 6,048,608 issued to Peet et al. The term "voiding agents" includes cavitating agents, foaming agents or blowing agents, of substantially any shape. Suitable voiding agents (i.e., cavitating agents) and voided skin layers (i.e., cavitated skin layers) are described in U.S. Application Serial No. 09/770,960.

In one embodiment, the first voiding agent makes up from about at least 15 percent to about at least 60 percent by weight of the first skin layer, and more preferably, from about at least 25 percent to about at least 50 percent by weight of the first skin layer and the first voiding agent may have a median particle diameter/size of from about 1 to about 5 microns and more preferably from about 1 to about 3 microns. In another embodiment, the first voiding agent comprises at least about 20 percent by weight, at least about 25 percent by weight, at least about 35 percent by weight, at least about 40 percent by weight, or at least about 50 percent by weight of the first skin layer and the median particle size of the voiding agent is in the 1- to 5-micron particle size range, and preferably in the 1- to 3-micron particle size range. For example, in one embodiment, the median particle size of the voiding agent is at least about 1.4 microns. In another embodiment, the median particle size of the voiding agent is at least about 3.2 microns.

In many embodiments, the voiding agent employed in either the first skin layer or the core layer is calcium carbonate in the 1- to 5-micron particle size range. More preferably the calcium carbonate employed is of a 1- to 2-micron particle size and is present in an amount of about 20 percent to about 60 percent by weight of the first skin layer. For example, in various embodiments, the quantity of 1- to 2-micron calcium carbonate is at least 25 percent, or at least 35 percent, or at least 40 percent by weight of the first skin layer. For some embodiments, the upper quantity limit of the 1- to 2-micron calcium carbonate is, for example, 60 percent or less, by weight of the respective cavitated layer, while in other embodiments the upper limit is no more than about 50 percent by weight of the respective cavitated layer. All percentages of calcium carbonate referred to herein are by weight, based on the total weight of the voided layer including the calcium carbonate therein.

This first skin layer may be relatively heavily voided with a suitable first voiding agent to create voids or cells to provide a desired level of porosity and/or permeability to aid absorption and/or dissipation of moisture from aqueous adhesives, among other considerations related to voided films, such as yield, stiffness and opacity. The cell or void structures are preferably substantially "open-cell" type structures, but may also be substantially "closed" or isolated cell type structures. The term "open-cell," as used herein refers to the cells having a transmissibility pathway between interconnected voids. The term "closed-cell" means that there is substantially little to no effective inter-pore interconnectivity or communication. In addition and as used herein, either term "open cell" or "closed cell" may be considered to include some degree of near-surface fluid permeation due to surface roughness, including the irregularities, voids, craters, pores, tortuosities, and cavities, formed superficially, that is, on or near the surface of a layer, such as the first side of the first layer, as may be caused by the voiding agents, other particulate additives, and/or orientation. Thereby, in many films, essentially closed cell layers, such as a print side skin layer, may exhibit some small degree of surface absorption due to these features and thus exhibit some degree of openness with respect to the cell type. Such surface features may provide small reservoirs for fluid absorption and adhesive anchoring, even though inter-pore interconnectivity with voids deeper within the first layer may be limited or substantially non-existent. Thereby, those skilled in the art will recognize that both closed-cell and open-cell layers may be capable of providing some degree of adhesive moisture absorption or transmission, though to differing extents as useful in determining whether a layer is considered substantially open cell or substantially closed cell.

When measured with an M2 Perthometer equipped with a 150 stylus from Mahr Corporation, the average surface roughness (Rₐ, output as defined in the operating manual of the Perthometer) of the first skin layer is typically greater than 0.5 microns. R_{z} (output as defined in the operating manual of the Perthometer), which weighs larger peaks more heavily, is typically greater than 4 microns.

The core layer comprises a polyolefin and has a first side and a second side. The first side of the core layer is adjacent to, though not necessarily directly in contact with, the second side of the first skin layer. Preferably, the core layer has a thickness of approximately 13 to approximately 240 microns (50 to 950 gauge units); however, for better economics, the more preferred thickness of the core layer is between about 13 to about 90 microns (50 to 350 gauge units).

In one embodiment, the core layer comprises polypropylene. Preferably, the polypropylene of the core layer is either isotactic or high crystalline polypropylene. In another embodiment, the core layer comprises polyethylene. Preferably, the polyethylene is high-density polyethylene. In another embodiment, the copolymer of the core layer is a mini-random copolymer having an ethylene content on the order of 1 percent or less and 99 percent or more of the co-polymer component, such as polypropylene. In many embodiments, the core layer is voided. In such embodiments, the core layer includes a second voiding agent, which may be the same or a different agent as the first voiding agent used in voiding the first skin layer. The core layer may be voided utilizing the voiding agents listed above and in concentrations as listed above, with particle size and concentrations determined by the properties desired to impart to the core layer. In other embodiments, the core may not be voided. In either embodiment, non-void-creating particulate additives or fillers, such as titanium dioxide, can be included in the core layer to enhance opacity.

Many preferred embodiments also possess a second skin layer on a side of the core layer opposite the first skin layer. The second skin layer comprises a polyolefin and has a first side and a second side. The first side of the second skin layer is adjacent to the second side of the core layer, though not necessarily directly in contact with the core layer. Preferably, the second skin layer is on the order of 2.5 to 6.4 microns (10 to 25 gauge units) in thickness. Suitable polyolefins for the second skin layer include polyethylene, polypropylene, polybutylene, polyolefin copolymers, and mixtures thereof. In many label embodiments, the second skin layer is not voided or when voided, is typically only lightly voided and has a substantially closed-cell type void structure. The second/exterior side is suitable for a surface treatment such as flame, corona, and plasma treatment; metallization, coating, printing; and combinations thereof.

In one embodiment, the second side of the second skin layer is metallized or is a glossy surface that is capable of dissipating static. In another embodiment, the metallized or glossy surface is coated with a polymeric coating. In still another embodiment, the second side of the second skin layer is coated with a relatively rough, non-glossy material that is also capable of dissipating static. Such coating may be a coating having properties and components according to this invention. For example, the coating on the second side of the second skin layer may be the same coating, as used on the first side of the first skin layer. Still other embodiments will employ a voiding agent in the second skin layer and/or the core layer, wherein such voiding agent has a median particle size of 1.5 microns or less, such that when the second skin layer is metallized, a bright mirrored appearance will result. The second skin layer is preferably treated to improve surface adhesion, such as by corona treatment. In an exemplary embodiment of this invention, the skin layer intended to receive the metallized coating has a thickness of approximately 5 microns (20 gauge units) or less.

In one embodiment, the thermoplastic film labels of the present invention further include a first tie layer and/or second tie layer positioned respectively between the core layer and the first skin layer and/or the core layer and the second skin layer. These tie layers may include homo-, co-, or terpolymers comprising polypropylene, polyethylene, polybutylene, or blends thereof and may have a thickness of at least about 0.75 microns (0.3 mil). The first side of the first tie layer is adjacent to the second side of the first skin layer; and the first side of the core layer is adjacent to the second side of the first tie layer. The second side of the second tie layer is adjacent to the first side of the second skin layer; and the second side of the core layer is adjacent to the first side of the second tie layer.

In film substrate embodiments comprising a cavitated first skin layer and a core layer, and optionally including a first tie layer, the density of the film substrate, excluding any coatings, metallization, and printing inks, etc., is preferably within a range of at least about 0.3 g/cc to about 0.8 g/cc. A lower bulk density may result in a film of unsuitable matrix/structural integrity, unless laminated to a stronger layer, and a higher bulk density may provide insufficient porosity for the effective absorption of moisture from the cold glue adhesive. These bulk density limits may vary somewhat, in films with relatively thick cores or relatively thin skins. For example, a film having a heavily cavitated core and/or tie layer may be cavitated such that the bulk density is slightly lower than 0.3 g/cc, while a film comprising a relatively thin cavitated first skin layer with relatively thick non-cavitated tie and core layers may exhibit a bulk density in excess of 0.8 g/cc. Thus, the term "about" is intended to incorporate such film structures that fall outside of the stated range but which are otherwise utilized according to this invention.

The present invention also includes containers or substrates labeled with the thermoplastic film labels according to this invention. Such labels provide several advantages over currently used paper and polymeric labels. In less demanding applications, the coatings of this invention may be used on the print side and/or the adhesive-receiving layer of paper labels to make some of the advantages realized from this invention available to paper label applications.

The coating can be applied to the exterior surface of the first skin layer (and optionally, alternatively or additionally to the second skin layer or print face) by any means known in the art including, but not limited to, spraying, dipping, direct gravure, reverse direct gravure, air knife, rod, and offset methods or combinations thereof. In one embodiment, the subject coatings of this invention comprise a water- and solvent-resistant polymer as a continuous or "binder" phase, with hydrophobic particles, such as clay or surface-treated minerals, as the particulate, discontinuous or "filler" phase of the formulation. In addition, there may be present, other performance-enhancing additives, such as emulsifiers, waxes, hydrocarbon resins, matting agents, silicas, plastic particles, cross-linkers, anti-block agents, and/or other additives known in the art.

Coating formulations according to this invention also demonstrate desirable characteristics when applied to the print-face of a polymer film. Some lithographic inks and over-lacquers contain hydrocarbon-based solvents or components therein and may generally be characterized as hydrophobic in nature. Similarly, many untreated polymeric films may also have hydrophobic tendencies. When hydrocarbon-solvent based fluids contact an oriented, untreated polymeric film, the fluids may be partially absorbed into the polymer film where the solvent fluid may react chemically and/or physically with the oriented polymer to cause some minor degree of relaxation of the orientation forces or alterations of the crystalline phases within the polymer matrix, resulting in some puckering or distortion of the contacted portion of the polymer film. The extent of such effect may be related to the amount of solvent that enters the polymer structure.

Polymer film coated with a primarily hydrophilic coating have been observed to fail to adequately protect the film from the solvent-based fluid, permitting the solvent-based fluid to penetrate through the hydrophilic coating and absorb into the polymer film.

As demonstrated in Example 1 below, coating polymer film with a hydrophobic coating formulation according to this invention, including, for example, a water- and solvent-resistant binder filled with a hydrophobic clay filler, offers better print-side protection to the polymer film against the absorption of hydrocarbon-based solvents than does either an uncoated film or a hydrophilic coating applied to the same film. The hydrophobic clay of the inventive coating is believed to function to absorb or bind with a portion of the hydrophobic fluid/solvent before such fluid fully penetrates through the coating layer to the polymer film, thereby reducing the concentration of solvent entering the oriented polymer film and attenuating the solvent-polymer interaction.

When the water- and solvent-resistant coating is applied to a film, it is subsequently dried, such that most of the wet-phase of the binder is evaporated, leaving the filler bonded in a binder-matrix having very small matrix pores remaining primarily due to removal of the wetting phase fluid. It is preferred that the particles of the filler be small in size, such that the pore sizes within the dried coating matrix and within the filler particles themselves, are small, for example, preferably sub-micron size, e.g., less than one micron in average diameter. However, it will be appreciated by those skilled in the art that although not likely as effective as the smaller particles at achieving the benefits discussed herein, particles that are larger than one micron may also be used. Particles of up to 200 microns in average diameter can be employed in water- and solvent-resistant coating formulations to facilitate a more rough or matte surface to the coated film substrate.

Benefits of the water- and solvent-resistant coating include providing acceptable to good initial tackup and moisture dissipation to effect adhesive drying, while improving post-application drying and label retention quality, including improved curl-resistance and ice-water immersion performance, while maintaining the benefits of hydrophilic coated cold-glue applied polymeric labels. Additionally, the water- and solvent-resistant coatings according to this invention alleviate the blocking and bonding problems experienced after printing, after sheeting and after die-cutting.

Static cling between adjacent film layers or labels can cause significant processing and labeling problems. In some film embodiments, the exterior/second side of the second skin layer is metallized or is a glossy surface that is coated with a low-resistivity coating capable of dissipating static charge. Anti-static additives may be incorporated within a coating formulation according to this invention or within a polymer layer separate from the water- and solvent-resistant coating, or the anti-static additives can be applied as a coating layer separate from the water- and solvent-resistant coating.

The water- and solvent-resistant coating also may be applied to a metallized, matte or glossy print-side surface to protect such side and/or to dissipate static charge therefrom. Although anti-static protection may be applied to either side of a film substrate, in most embodiments, it is not necessary to provide anti-static protection to both sides of the film structure. In each embodiment, the surfaces of the second/print skin layers may be made capable of dissipating static charge. For example, the surface resistivity may be less than 14 log ohms per square (per square geometric region as measured on a circular film sample inserted into a Keithley Model 8008 Resistivity Test Fixture with 500 volts applied using a Keithley Model 487 Picoammeter/Voltage Source, or alternatively using an Autoranging Resistance Indicator Model 880 from Electro-Tech Systems, Inc., Glenside, PA), when the relative humidity is greater than 50 percent and the metallized surface is reflective or the gloss is >30 percent when measured with a BYK Gardner Micro-gloss 20° meter. Adequate gloss and metallic sheen can be obtained from using a base film which is uniaxially or biaxially oriented and which has a second/print side that contains only substantially closed-cell voids, a relatively low percentage of voids, or no voids at all on the gloss or metallic second/print side. In the metallized embodiments, metal, such as aluminum, is deposited on the smooth, print side.

To further enhance gloss or to preserve metallic sheen, a smooth clear polymeric coating may be applied over the smooth second side or over the metallic layer deposited on the smooth second side. Such polymeric coating can be applied by any means known in the art including, but not limited to, application of polymeric material dispersed in water or dispersed in a solvent, and extrusion coating.

Smooth surfaces of the outer print/metallization surface of the second skin layer may preferably have an average roughness (Rₐ) of between 0.1 and 0.3 microns before metallization. (Rₐ was measured with an M2 Perthometer from Mahr Corporation equipped with a 150 stylus.) More preferably, the value of Rₐ is less than 0.3 microns, with Rₐ values less than 0.15 being most preferred. When such sheets of label film stock are so smooth, the sheets tend to block together and can be very difficult to separate once all the air gets pressed from between them by the weight of the sheets in a stack. When this occurs, it can be very difficult to separate the sheets when trying to feed them into a printing press, a cutting die, or when dispensing labels on a bottling machine. Difficulties in separation can occur despite the relatively highly cavitated surface of the first skin layer which is much rougher (e.g., Rₐ >0.5) than the second side of the second skin layer. However, when the rough surface of the first skin layer is coated with the filled coating of the present invention, sheets and labels have processed well in printing presses and bottling lines.

In embodiments wherein the second side of the second skin layer is metallized, preferably, a coating is applied to the metallized surface. Such coatings may provide desirable print qualities including wet-scratch resistance, machinability enhancement, and mar resistance. Suitable examples are described in U.S. Patent 6,025,059 and U.S. Patent Application 2003/0207121. Additionally, a variety of urethanes, acrylics, polyesters, and blends thereof may also be suitable. Suitable examples are described in U.S. Patents 5,380,587 and 5,382,473.

Preferably, water- and solvent-resistant coatings applied to the metallized surface do not significantly diminish the bright mirrored appearance of the metallized surface. Similar coatings can be used on the second side of the second skin layer without metallizing. However, such structures would lose a significant contribution to the anti-static properties made by the metal and depending upon the formulation of the clear coating, anti-static additives may then be necessary in the coating formulation for the print face.

In some embodiments, the surface resistivity of the second skin layer and the layer coated with the water- and solvent-resistant filled coating is less than about 14 log ohms/square, more preferably less than about 12 log ohms/square, and most preferably less than about 10 log ohms/square. Surface resistivity measurements may be made with an Autoranging Resistance Indicator Model 880 from Electro-Tech Systems, Inc., Glenside, PA, especially when measuring a surface that is metallized or that has a clear coating over the metal. However, this device cannot measure resistances above 12 log ohms/square. Alternatively, surface resistivity may be measured using a 487 Picoammeter/Voltage Source equipped with an 8008 Resistivity Test Fixture supplied by Keithley Instruments, Cleveland, Ohio, especially when the surface resistivity exceeded 12 log ohms/square. For the measurements made with the Keithley meter, the instrument applies 500 volts to the surface of the sample.

In another embodiment, the second side of the second skin layer is coated with a relatively rough, non-glossy material that is capable of dissipating static. That is, the surface resistivity is less than 14 log ohms/square when the relative humidity is greater than 50 percent, gloss is <30 percent when measured with a BYK Gardner Micro-gloss 20° meter. In some embodiments the surface-applied coating has a roughness Rₐ that is greater than 0.20 microns and an R_{z} that is greater than 1.0 micron when measured with a Perthometer S2 from Mahr Corporation, Cincinnati, Ohio, especially such a model equipped with a 150 stylus. For good print quality, the roughness Rₐ is preferably less than 0.35 and R_{z} is preferably less than 3.0 microns. When measured with a Messmer Parker Print-Surf Roughness and Air Permeability Tester Model ME-90, the rough coating for the second side of the second skin layer preferably has an average roughness between 0.75 and 3 microns, more preferably between 1 and 2 microns. Suitable examples of relatively rough, non-glossy coatings having wet-scratch resistance are described in U.S. Patent 6,025,059 and U.S. Patent Application 2003/0207121. Another example is PD900 NT from Process Resources Corporation cross-linked with polyfunctional aziridine, such as CX-100 from Avecia, and NAC-116, an anti-static additive from Process Resources Corporation.

In still another embodiment, the first side of the first skin layer and the second side of the second skin layer are coated with the same rough, non-glossy material that is capable of dissipating static. Due to texture differences between the first side of the first skin layer and the second side of the second skin layer, the coated adhesive-receiving layer may be rougher than the print face, though the same coating is on both sides.

Films described by pending U.S. Patent Applications serial numbers 09/770,960, 10/098,806, and 10/331,582, disclose representative substrates that are suitable for receiving the water- and solvent-resistant filled coating of this invention.

Preferably, the adhesives used with the present invention are water-based adhesives, including cold glues as commonly used in container or bottle labeling operations. Water-based adhesives are well known in the art for use with traditional paper labels.

As referenced herein, adhesive is applied to the first side of the first skin layer of the films of the present invention. Cold glue adhesives generally comprise solid base materials in combination with water. In one embodiment, the cold glue is an aqueous solution of a natural adhesive (e.g., casein). In another embodiment, the cold glue is an aqueous solution of a resin [e.g., poly(vinyl acetate) {PVA} or ethylene vinyl acetate {EVA}]. Cold glues are widely used as an economical alternative to wrap around or pressure sensitive labels. Some cold glues are a colloidal suspension of various proteinaceous materials in water and are derived by boiling animal hides, tendons, or bones that are high in collagen. Alternatively, cold glue can be derived from vegetables (e.g., starch, dextrin). Some cold glues are based on synthetic materials (resins). Examples of cold glues which are suitable for the practice of the present invention include HB Fuller WB 5020, National Starch Cycloflex 14-200A, AABBITT 712-150; and Henkel Optal 10-7026; Henkel Optal 10-7300, and Henkel Optal 10-7302. The aforementioned list of cold glues contains trademarks of HB Fuller, National Starch, AABBITT, and Henkel, respectively.

The coated film labels comprising the water-based adhesive are attached to containers by means known in the art. The containers have a surface that is adjacent to the glue applied to the coated first/adhesive-receiving side of the first skin layer of the label. Suitable materials for the container include glass, ceramics, thermoplastics, metal and other materials. The present invention provides containers having a thermoplastic film label. These containers include a surface of the container; a water-based adhesive adjacent to the container surface; and a hydrophobic-coated thermoplastic film label. The coated thermoplastic film label is as described above.

In some embodiments, the core and/or tie layer(s) may also include a conventional non-void-inducing filler or pigment such as titanium dioxide. Generally, from an economic viewpoint at least, it has not been considered to be of any particular advantage to use more than about 10 percent by weight of titanium dioxide to achieve a white label suitable for printing. Greater amounts could be added for greater opacity so long as there is no undue interference with achieving the desired properties of the thermoplastic label.

The film labels of the present invention can be relatively clear translucent or opaque. In one embodiment, the label is white opaque and may provide an excellent contrasting background for printed material applied to the second side of the core layer or to the surface of the second skin layer of the film label. In another embodiment, the label has a transparent polypropylene core layer that has a co-extruded first skin layer and second skin layer.

In another embodiment, the core layer comprises an opaque core material that is an oriented polypropylene structure cavitated in a special way to produce a pearlescent opaque appearance. A film embodiment of this type is described in U.S. Patent 4,377,616 issued to Ashcraft et al.

Other conventional additives, in conventional amounts, may be included in the coatings or films of the invention. Suitable other conventional additives include anti-oxidants, pigments, orientation stress modifiers, flame-retardants, anti-static agents, anti-blocking agents, anti-fog agents, and slip agents. Another class of additives that may be included in the film structures according to this invention are low molecular weight hydrocarbon resins (frequently referred to as "hard resins".) The term "low molecular weight hydrocarbon resins" refers to a group of hydrogenated or unhydrogenated resins derived from olefin monomers, such as the resins derived from terpene monomers, coal tar fractions and petroleum feedstock. Such suitable resins prepared from terpene monomers (e.g., limonene, alpha and beta pinene) are Piccolyte resins from Hercules Incorporated, Wilmington, Del., and Zonatac resins from Arizona Chemical Company, Panama City, Florida. Other low molecular weight resins are prepared from hydrocarbon monomers, as C₅ monomers (e.g., piperylene, cyclopentene, cyclopentadiene, and isoprene), and mixtures thereof. These are exemplified by the hydrogenated thermally oligomerized cyclopentadiene and dicyclopentadiene resins sold under the trade name Escorez (i.e., Escorez 5300) by ExxonMobil Chemical Company of Baytown, Texas. Others are prepared from C₉ monomers, particularly the monomers derived from C₉ petroleum fractions which are mixtures of aromatics, including styrene, methyl styrene, alpha methyl styrene, vinyl naphthalene, the indenes and methyl indenes and, additionally, pure aromatic monomers, including styrene, α-methyl-styrene and vinyltoluene. Examples of these resins include hydrogenated α-methyl styrene-vinyl toluene resins sold under the trade name Regalrez by Hercules Incorporated of Wilmington, Delaware.

This invention also comprises an article, such as glass, metal, or plastic bottle, box, or other packaging element such as may be useful for packaging a packaged product, labeled with a polymeric label that is coated according to this invention. Such labels contain the resistant coating on at least the adhesive-receiving side of the polymeric label and are adhered to the article using a cold glue adhesive. Optionally, the label may comprise an embodiment of this coating on the print side of the label. The adhesive-coated label is then applied to a labeling surface on the article. A labeling surface means substantially any surface or portion of the article that is appropriate for adhering the label thereto.

In addition to the coating formulation, film/label structures and use described herein, this invention also includes a method of labeling an article with a resistant coated polymeric label using a cold glue adhesive comprising the steps of: a) providing an article having a labeling surface; b) providing a polymeric label substrate having a first side and a second side, wherein the first side is an adhesive-receiving side; c) applying a coating to the first side of the polymeric label substrate, the coating comprising at least a filler component and a binder component, wherein at least one of the filler component and the binder component is substantially hydrophobic; d) thereafter applying a cold glue adhesive to the coating; and e) thereafter applying polymeric label to the article to produce a labeled article.

In addition to the method of labeling an article, this invention also comprises a method of preparing a coated label for use with a cold glue adhesive, comprising the steps of: a) providing a polymeric label substrate having a first side and a second side, wherein the first side is an adhesive-receiving side; b) thereafter coating the adhesive-receiving first side of the polymeric label substrate with a coating to form a coated label substrate that is water- and solvent-resistant, said coating comprising at least a filler component and a binder component, at least one of which is substantially hydrophobic; and c) thereafter drying the coating on the resistant coated label substrate to form a coated label. In some embodiments, the adhesive receiving skin layer may also be voided, such as by calcium carbonate or PBT particles.

The methods according to this invention may further comprise the steps of metallizing, printing, applying an embodiment of the herein described coating, and/or applying an anti-static coating to the second side of the label substrate.

The step of providing an article comprising a labeling surface includes articles such as glass, metal, or polymeric bottles, boxes, and product packaging, containers, and vessels.

This disclosure is merely illustrative and descriptive of the invention by way of example and various changes can be made by adding, modifying, or eliminating details without departing from the fair scope of the teaching contained in the disclosure. It will be recognized by those skilled in the art that various changes to the embodiments or methods herein as well as in the details may be made within the scope of the attached claims without departing from the spirit of the invention. However, such modifications and adaptations are within the spirit and scope of the present invention.

### EXAMPLES

The following examples refer to or utilize a commercial film produced by ExxonMobil, namely, 85 LP200. This film is a biaxially oriented five-layer opaque film, typically utilized in certain labeling applications and having the following structure. All percentages shown are based upon weight:

Adhesive-receiving surface

| | |
|---|---|
| Layer 1 (5-30%) | OPP or HCPP + 20-60% CaCO₃ + 0-15% Antiblock |
| Layer 2 (5-30%) | OPP or HCPP + 0-60% CaCO₃ |
| Layer 3 (20-85%) | OPP or HCPP + 0-15% CaCO₃ |
| Layer 4 (1-5%) | OPP or HCPP + 0-10% Antistat |
| Layer 5 (0.6-17%) | Propylene-ethylene copolymer |

| | |
|---|---|
| Print-receiving surface (with or sans metal) | |

The term "OPP" means polypropylene resin, the term "HCPP" means high crystallinity polypropylene resin, and "CaCO₃" means calcium carbonate.

### Example 1

Some lithographic inks and over-lacquers cause base-sheet distortion. This example demonstrates that water-resistant polymer coatings filled with hydrophobic clay offer better protection against base-sheet distortion caused by inks and lacquers when applied to both surfaces of 85 LP 200 than does the same polymer blended with hydrophilic clay.

Samples of coated 85 LP200 were tested, exhibiting a pseudo-embossing or puckering phenomenon on some samples after printing. Areas printed with heavy ink showed what looked like an embossed image over the heavily inked area when viewed from the back of the sheet. Darker inks seemed to be more troublesome than lighter colors. In areas that had only clear over-lacquer, the area also looked embossed, but in the opposite direction.

To understand the cause of this phenomenon, several samples were prepared and applied to glass bottles on a six-inch wide Tallboys coater at 9.1 to 10.7 metres per minute (30 to 35 feet per minute) with in-line corona treatment. The coatings were dried at 104 °C (220°F). Samples of 85 LP200 were coated on both sides with about 2.3 g/m² of clay-filled coating containing a binder, a filler, and variable amounts of i) MichemEmulsion 09730 (a cationic emulsion of high-density polyethylene plus wax plus emulsifier, from Michelman, Inc.) and ii) amorphous low-porosity (makes it more water resistant) silica gel (Sylysia 770 from Fuji Silysia, but could also be Siloblock, Silysia, or SiOx silica compound). The clay-filled coatings were of two types: 1) The first type was MD125 from Michelman, Inc., which contained 2.5 dry parts (all parts are on a dry basis) hydrophobic clay (Lithosperse 7005 CS from Huber, a clay treated with an inorganic material to render the clay hydrophobic) per 1.0 dry parts of R1117 XL (a cationic acrylic emulsion from W. R. Grace) as the binder. Therefore, the water- and solvent-resistant coating contained about 71 percent filler, not counting other formulation additives, and 2) The second type of clay-filled coating was MD125W from Michelman, Inc., which contained 2.5 dry parts hydrophilic clay filler (obtained from Michelman, Inc.) per 1.0 dry parts of R1117 XL binder. Coated samples of 85 LP200 were tested in the laboratory by daubing ink (Cyan Contempo lithographic ink from Flint Ink Company) or varnish (Overcoating 1375 from Coating and Adhesives Corporation) on the coated printing surface with a spatula. After 28 hours at ambient temperature, the print surfaces of the samples were rated for puckering (sheet distortion) on a 0 to 7 scale. Lower numbers are better. The following table shows the results:

**TABLE 1**

| Puckering Due to Blue Ink or Clear Varnish on the Print Face | | | | |
|---|---|---|---|---|
| Filler Type | Wax (pph) | Silica (pph) | Blue-pkr-PF | Varnish-pkr-PF |
| Hydrophobic | 10 | 0.0 | 0 | 2 |
| Hydrophobic | 10 | 2.5 | 4 | 3 |
| Hydrophilic | 10 | 5.0 | 4 | 4 |
| Hydrophobic | 5 | 0.0 | 1 | 2 |
| Hydrophobic | 5 | 2.5 | 1 | 3 |
| Hydrophilic | 5 | 5.0 | 1 | 5 |
| Hydrophobic | 15 | 0.0 | 1 | 3 |
| Hydrophobic | 15 | 2.5 | 2 | 4 |
| Hydrophilic | 15 | 5.0 | 2 | 4 |

For formulation purposes, each coating contained 100 dry parts clay-filled coating (MD125 or MD125W). Wax levels, such as with carnauba wax, paraffin wax or other wax blends, were varied between 5 and 15 dry parts per hundred (pph) clay-filled coating. Amorphous silica was varied between zero and 5 pph.

The varnish was more aggressive than the blue ink, but the trends were similar. Data for the responses of puckering caused by the varnish to formulation changes appear below, where "Var-pkr-PF" means the pucker-factor calculated from the observed puckering caused by the varnish, for the coating formulations described in the following table:

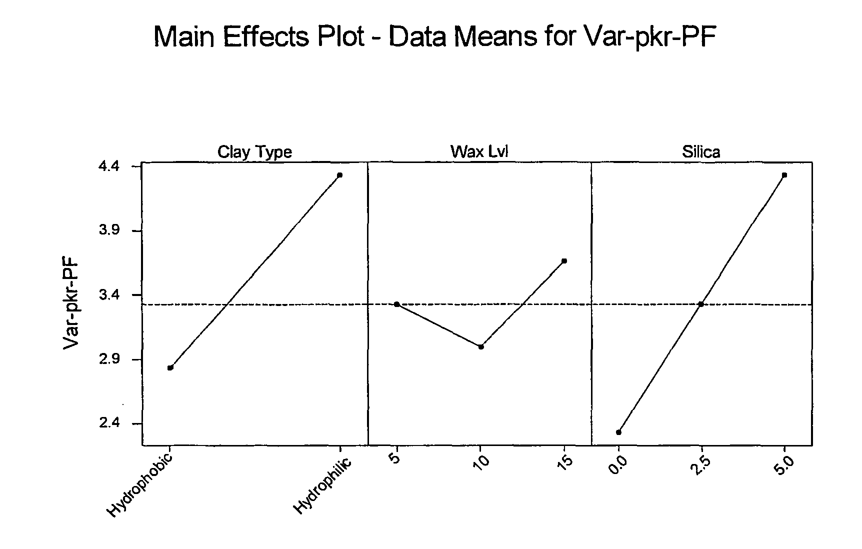

The values on the X-axis of the above graph represent percentages of wax and silica, respectively. The responses indicate that hydrophilic particles like hydrophilic clay or even low-porosity silica compromises resistance to the hydrophobic varnish. Surprisingly, resistance to ink and varnish is better with water- and solvent-resistant binders containing hydrophobic fillers. As a reference, uncoated base sheet showed moderate puckering (a 5 rating). The tests demonstrate that there is little difference in ink-induced sheet distortion between uncoated material and water-resistant material containing a significant loading of hydrophilic material.

The same coatings were applied to Labellyte^{™} 160LL302 made by ExxonMobil, which is a cavitated white opaque film that does not have a heavily cavitated or voided skin structure on either side. In all cases, no puckering was observed. Therefore, it is clear that the more heavily cavitated film structure is more vulnerable to distortion by inks and ink solvents. It is hypothesized that the larger and perhaps more open-celled type voids possess more effective permeability and hence improved capillary attraction to the hydrophobic fluid. Resistance to ink and varnish is demonstrated as better with hydrophobic fillers. It is believed that the varnish and ink, which are also hydrophobic in nature, absorb more readily to the hydrophobic filler in the coating, thus preventing or reducing the hydrophobic fluid from migrating to the polymer film to cause the polymer film to pucker. Similar trends were observed when ink or varnish was applied to the porous surface in symmetrically coated film samples, including both the print surface and adhesive surface.

### Example 2

This example shows puckering data for asymmetrically, coated metallized labels. Freshly metallized 85 LP200 was coated on the metallized print face with 0.15 to 0.30 g/m² of a coating mixture containing 100 dry parts R1117 XL from W. R. Grace, 12.5 dry parts MichemEmulsion^{™} 09730, 0.5 dry parts Tospearl^{™} 120 from Toshiba Silicones, and 1.7 dry parts Genapol UD 050 from Clariant Corporation. The coating formulation could also optionally include, if deemed beneficial for the desired application, a small percentage of a buffering agent for pH control, such as sodium bicarbonate, ammonium bicarbonate, ammonia, or organic amines or imidazoles. The clear print-face coating was applied at 10 percent solids and dried. Two samples were prepared having the same metallic-looking print face. Sample A had no coating applied to the voided adhesive-receiving layer. Sample B was coated on the adhesive-receiving side with a 33 percent-solids mixture comprising 100 dry parts MD125 from Michelman, Inc., 10 dry parts MichemEmulsion^{™} 09730, 5 dry parts Sylysia^{™} 740, and 20 dry parts of a pre-cured hardened epoxy mixture prepared in the following way.

The following ingredients were delivered to an agitated container:

| | |
|---|---|
| Water | 450 kg |
| Ludox TM40 from W. R. Grace | 5.6 kg |
| Nippon Shokubai Polyment NK7000 | 198 kg |

These ingredients were mixed for thirty minutes with vigorous agitation before adding the next components:

| | |
|---|---|
| Daubert Daubond 492X6311 | 83 kg |
| Water | 50 kg |

Each mixture was agitated vigorously for about 16 hours before using. The epoxy mixture, which comprises part of the binder system, is about 18 percent solids during the pre-curing stage and is added directly to the other components. The additional binder lowers the final filler-to-binder ratio from about 2.5 (as supplied in MD125) to about 1.5. That is, the hydrophobic filler content is about 60 percent in the dried coating. For Sample B, the coating weight on the adhesive-receiving surface was between 1.2 and 1.9 g/m².

Samples A and B were slit into rolls and converted into sheets for printing. Sheets were printed on a 102-cm (40-inch) Komori Lithrone Press. White and blue UV-curable inks were used with a UV-curable over-lacquer at 5900 impressions per hour. The graphic contained 2-cm block letters formed by the contrast between metal (inside the letters) and surrounding dark blue ink. The graphic also contained five lines of small metallic-looking lettering (2-mm high), and a 1.5 by 2.5-cm white/blue UPC bar code. Finished labels were evaluated for puckering using the same 0-to-7 scale described in Example 1.

Sample A was rated about 6.0, which means that in the areas of fine lettering, five rows of swelling were clearly visible when the label was viewed from the back. One could even detect patterned swelling corresponding to the bars in the UPC box. Puckering behind the large block letters was pronounced enough to affect the flatness of the label and different graphics could produce unwanted curl.

Sample B was rated about 2.5, which means that no puckering was visible in the region of the UPC symbol and the puckering in the other areas was much less pronounced, though still visible. These results are consistent with observations of reduced curl with backside-coated material. The backside coating for Sample B was resistant to rubbing with a tissue soaked with water, isopropyl alcohol, ethyl acetate, or methyl ethyl ketone.

### Example 3

This example demonstrates that voided/cavitated polymer surfaces coated with water- and solvent-resistant polymers filled with hydrophobic clay outperform uncoated samples with respect to blocking after die-cutting. A designed experiment was conducted on a commercial film converter's printing press. Experimental variables included drying conditions ("high" and "low" air flow and IR heater settings), lithographic ink type, cross-linker presence or absence in the overprint varnish, presence or absence of UV-curable inks in the print job, and the presence or absence of a clay-filled coating on the back of ExxonMobil's metallized 85 LP200 film coated on the print face with about 0.2 g/m² of a coating containing 100 dry parts R1117 XL from W. R. Grace, 12.5 dry parts MichemEmulsion^{™} 09730, and 0.5 parts Tospearl^{™} 120 from Toshiba Silicones, and 1.7 parts Genapol UD 050 from Clariant Corporation. When used, the adhesive side coating comprised 100 parts MD125 from Michelman, Inc. and 5 parts Sylysia^{™} 740, a low porosity (0.5 ml/gm) hydrophilic silica, from Fuji Silysia applied at about 1.5 g/m². After printing, the samples were cut with a die and the label stack was evaluated as to blocking and given a qualitative rating between zero and 5. The only acceptable value is zero. In the table below, a "yes" under "BSC" means the film is backside coated or coated on the adhesive receiving side, and "yes" under "XL OPV" means that the overprint varnish was crosslinked. Additionally, in the table below Brand 1 is an oxidative-cure type lithographic ink from Flint Contempo, Ann Arbor, MI, and Brand 2 is an oxidative-cure type lithographic ink from Wickoff Color Corporation, Fort Mill, SC. The UV curable ink in the table below is a white color, UV-curable ink from Superior Printing Ink Company, New York, NY. The following table summarizes the results and the test conditions:

**TABLE 2**

| Printing Test Conditions and Blocking Results after Die-Cutting | | | | | | |
|---|---|---|---|---|---|---|
| BSC | Litho Ink | Type XL OPV | UV Ink | IR Set | Air Drier | Cut Blocking |
| Yes | Brand 1 | No | No | High | High | 0 |
| No | Brand 1 | No | Yes | Low | High | 4 |
| No | Brand 1 | Yes | Yes | High | Low | 0 |
| Yes | Brand 1 | Yes | No | Low | Low | 0 |
| No | Brand 2 | Yes | No | Low | High | 2 |
| Yes | Brand 2 | Yes | Yes | High | High | 0 |
| Yes | Brand 2 | No | Yes | Low | Low | 5 |
| No | Brand 2 | No | No | High | Low | 4 |

The following plot shows the mean response of blocking to backside coating (BSC):

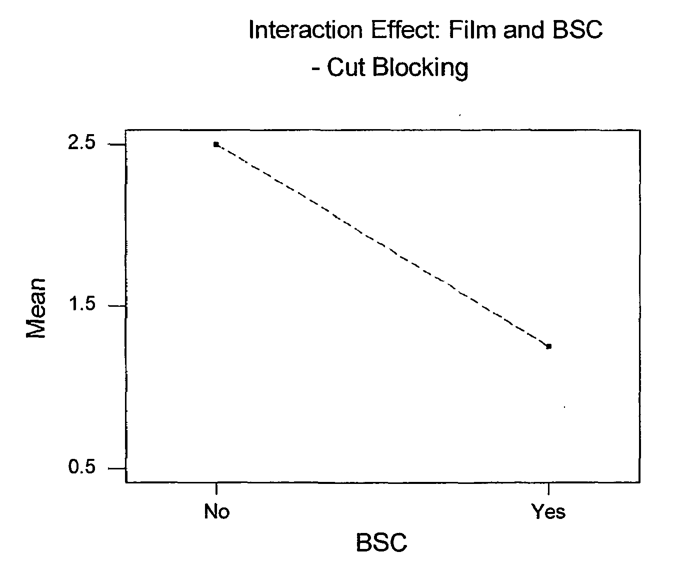

Each point in the above plot represents the average blocking for four different test conditions. The results clearly demonstrate that the blocking after die-cutting was less on average for the group of samples that were coated on the back (BSC= Yes) with a hydrophobic clay-filled coating according to this invention. Such results support the conclusion that coating persistence is more robust from processing through the printing, die-cutting and application, with a hydrophobic clay-filled coating on the adhesive-receiving surface of the polymer substrate.

Examination of the data in Table 2 reveals that three of the four points contributing to the plotted mean exhibited zero blocking when the hydrophobic backside coating was present. Only one of four test conditions produced no blocking when the backside coating was absent. However, to achieve this effect, the tested coating required cross-linker in the overprint varnish and a high setting on the IR heater when UV inks were present in the print job. Although acceptable results may be achieved for some coating formulations without a backside coating, such as when the overprint varnish is crosslinked and the IR heat and air are set to high, the presence of the backside coating improved label performance by offering a wider spectrum of operating conditions or variables underwhich a press and converting equipment may be operated. The undesirable result with the backside-coated samples was from a backside coated sample that had no cross-linker in the overprint varnish and a low setting was used on the IR heater and the air drier. This suggests that proper curing of UV inks and the presence of cross-linkers in the overprint varnish are both beneficial to the successful preparation of non-blocking die-cut labels. Since adequate heat curing becomes more difficult at higher press speeds, one would expect polymeric patch-label films with hydrophobic clay-filled coatings on the adhesive-receiving side to permit faster processing at the printing press than hydrophilic-coated films.

### Example 4

Data from the first three examples additionally support a conclusion that, under a narrower range of processing conditions, hydrophilic fillers could perform acceptably in a hydrophobic binder. However, the window for processing and printing conditions would be narrower than when hydrophobic fillers are employed. For example, a water-based over-lacquer cross-linked with CX-100 from Avecia, a poly-functional aziridine cross-linker, was used in place of the UV-curable over-lacquer in Example 2. This change virtually eliminated puckering for the samples having the adhesive-receiving layer coated with the water- and solvent-resistant coating filled with hydrophobic clay.

### Example 5

This example addresses blocking issues with die-cutting stacks of film into label stacks. Some printers use etched gravure cylinders or flexographic plates to print on film. These printers often start with a slit roll of stock film and then after printing, cut the printed web into stacks of sheets, which are eventually stacked and further cut into individual labels. Therefore, roll-to-sheet printers typically do not require a pre-applied print-primer as do the sheet-to-sheet printers. Sample C was prepared in the same way as Sample B (in Example 2), except that no coating was applied to the metal surface. Sample D was prepared according to art taught by Kirk et al., in a patent application filed on December 31, 2002, (Attorney Docket No. 2002B 196, entitled "Coating for the Adhesive-Receiving Surface of Polymeric Labels"), in which a thin layer of hydrophilic inorganic material (Laponite RD, synthetic sodium magnesium silicate from Southern Clay Products, Inc.) was applied to the adhesive-receiving layer at about 0.1 g/m². Sample D also had no coating on the metal surface.

After corona treating the metal surface, a solvent-based print primer was applied in the first printing press station. The next six stations of the press applied different colors of nitrocellulose/urethane ink, followed by a nitrocellulose/urethane overprint varnish. Ink solvents included alcohols and acetate esters. Samples C and D were printed in this manner. Printed rolls were then taken to a sheeter for conversion to sheets. Sample C, which has the hydrophobic filled coating on the adhesive-receiving layer, processed acceptably. However, Sample D, with the hydrophilic inorganic coating on the adhesive side, did not process acceptably. Sheet-to-sheet blocking was experienced when trying to process Sample D into individual labels. Though the hydrophilic inorganic layer can help the processing of unprinted rollstock into sheets, interactions between the hydrophilic inorganic layer and the ink solvents after printing contributes to blocking problems with subsequent die-cutting and processing. However, Sample C posed no processing issues and during a subsequent bottling trial, 17,000 individual labels successfully processed without issue. This example illustrates the enhanced processing benefits of a water- and solvent-resistant hydrophobic coating on the adhesive-receiving layer as compared to a hydrophilic coating layer.

### Example 6

It is desirable that, after a curing period, a label attached to a bottle with cold glue adhere to the bottle while enduring ice-water immersion in an ice chest for prolonged periods without the label loosening or coming off the bottle. Neck labels on beer bottles are especially vulnerable to water attacking the adhesive, because of their relatively small size (about 3 cm high by about 10 cm long) compared to body labels (about 8 cm by about 11 cm). Four samples were compared for retained ice-chest adhesion: Sample C (described in Example 5), Sample E (which had no coating on the adhesive-receiving layer), Sample F (which has the same coating as Sample C applied to both sides of 85 LP200), and Sample G, which is a polymeric "Coors Original" label coated and printed by the Northstar Print Group in Iron Mountain, MI and commercially supplied to Coors Brewing Company, in Golden, CO. (85 LP200 label film from ExxonMobil Chemical, coated on the back with a coating from an unknown source). The coating on the back of Sample G was resistant to rubbing with water, somewhat resistant to rubbing with isopropyl alcohol, but not at all resistant to rubbing with ethyl acetate or methyl ethyl ketone, i.e., not solvent resistant. Therefore, independent of retained ice-chest adhesion, this coating could be vulnerable to processing limitations described in prior examples, which were overcome by having a solvent-resistant coating on the adhesive-receiving surface. Sample G is a commercial benchmark that the bottler deems to be fit for use with respect to retained ice-chest adhesion.

Samples were attached by hand to glass bottles using Henkel Optal 10-7302 cold glue. The labeled bottles were cured at ambient temperature and humidity for one week before insertion into the ice chest. Results appear in Table 3 for retained adhesion after one, three, and seven days in the ice chest.

**TABLE 3**

| Cold Glue Adhesion for Neck Labels Made from 85 LP200 with or without a Metallized Print Face | | | |
|---|---|---|---|
| **Sample** | **Day 1** | **Day 3** | **Day 7** |
| | % Tear | % Tear | % Tear |
| C (Metallized) | 90 | 95 | 60 |
| E (Metallized) | 90 | 85 | 80 |
| F (No metal) | 100 | 95 | 90 |
| G (No Metal) | 95 | 75 | 50 |

"Tear" refers to the percentage of the label that remains attached to the container when it is peeled off the bottle. The base film tends to split between the more heavily voided/open-cell layers and the less-voided/closed-cell or non-voided layers in this test. None of the neck labels showed any sign of flagging (releasing of the edges from the bottle). Initial tack-up (the resistance to repositioning or "swimming" by the labels) was good for all of the samples. Results in Table 3 show that the water- and solvent-resistant filled coating performed comparably to commercially acceptable benchmarks that were coated or uncoated on the adhesive-receiving layer.

### Example 7

This example demonstrates the effect of coating weight on retained cold glue adhesion in an ice chest. For this test, bundles of unprinted labels were applied using a Krones rotary cut and stack cold glue labeler that applied labels at about 450 bottles per minute. About 51 to 76 microns (2 to 3 mils) of cold glue adhesive were applied to each label. Labeled bottles were cured at ambient temperature for eight days before placing in an ice chest. Bottles were then covered to the top of the necks with ice and water for two days. This example reports the results for the larger body labels, which, due to their size (described in Example 6), dry more slowly. Four experimental samples were tested. Sample E (the uncoated reference from Example 6) and Sample G (the clay-coated benchmark also described in Example 6) were included as controls. Sample H had the same backside coating as described in Example 3, except that the application weight was 2.3 g/m². Sample I had the same coating as Sample H but applied at only 0.6 g/m² to the adhesive-receiving surface. Sample J comprised 100 dry parts PD900 NT from Process Resources, 2.2 parts CX-100 from Avecia, and 0.2 dry parts of the anti-static additive NAC-116 from Process Resources applied at 2.3 g/m². Sample K had the same coating as applied to J, at only 0.3 g/m² to the adhesive-receiving side. Samples H, I, J, and K were all resistant to rubbing with water, isopropyl alcohol, ethyl acetate, and methyl ethyl ketone. Tear was evaluated after eight days of drying at ambient temperature followed by two days of immersion in the ice chest. Results appear in Table 4:

**TABLE 4**

| **Sample** | **Backside Coating Weight (g/m²)** | **Dry Adhesion after 8 Days (% Tear)** | **Adhesion after 2 Days in Ice (% Tear)** |
|---|---|---|---|
| E | Not Coated | 50 | 12 |
| G | 2.1 | 100 | 95 |
| H | 2.3 | 100 | 41 |
| I | 0.6 | 100 | 95 |
| J | 2.3 | 100 | 75 |
| K | 0.3 | 100 | 83 |

These results demonstrate that filled coatings that are resistant to both water and solvents enhance the rate at which the cold glue dries in relatively large body labels compared to an uncoated voided substrate. Examples H through K are resistant to water and solvents, while G is not solvent resistant and E is not coated. This is an unexpected result, in view of prior art that teaches that hydrophilic coatings, especially those that absorb water, are necessary for enhanced drying rates of water-based cold glues behind plastic labels. Furthermore, backside coatings of this invention show significant enhancement of retained adhesion in ice at coating weights below 0.4 g/m², e.g., 0.3 g/m² as compared to the 0.4 to 13.0 g/m² range typically utilized with hydrophilic coatings. Results for Examples H through K in Table 4 also suggest that, as with hydrophilic coatings, if the hydrophobic water- and solvent-resistant coating is too thick, retained glue adhesion in ice will decrease. The preferred coating thickness range for coatings according to this invention for adhering polymeric labels as discussed herein to glass bottles with cold glue adhesive is to preferably in the range between 0.2 and 2.5 g/m² and more preferably in the range between 0.2 and 2.3 g/m². Thinner coatings may also be advantageous from the standpoint that a functional lower coating weight may be economically desirable as compared to heavier weight coatings and/or hydrophilic coatings applied at heavier weights.

### Example 8

This example demonstrates that the voided sub-layer in the base sheet further enhances hydrophobic coating performance. Initial tack-up and retained cold glue adhesion in ice are further improved when the adhesive-receiving surface is more heavily voided or cavitated. Similarly, retained adhesion in ice bath immersion is enhanced when the water- and solvent-resistant binder contains hydrophobic filler.

Cold glue adhesive was applied by hand to bottle body labels as described in Example 6. Labeled bottles were cured at ambient conditions for two weeks before immersing in ice for two days. This is a longer drying time than was used in Example 7. Longer curing times typically improve retained adhesion in ice. Sample H (as described in Example 7) was included as a reference. Sample L had the same coating as Sample H; however, the coating was applied to ExxonMobil's Labellyte^{™} 160 LL302, which is a cavitated white film that has substantially very few to no surface voids on the adhesive-receiving surface and a substantially closed-cell type cavitation structure. Sample M was coated with 2.5 g/m² of a coating comprising 100 dry parts R1117 XL from W. R. Grace as a binder, 30 dry parts Syloid^{™} 244 from Grace Davison (a hydrophilic, low porosity silica with a porosity of 1.6 mL/g, average particle size is 3 microns) as a filler, 2 dry parts Imicure EMI-24 epoxy curing catalyst from Air Products, and 15 dry parts Lambent PD from Lambent Technologies applied to the adhesive-receiving surface of 85 LP200. This material can covalently bond to the backbone of R1117 XL, so it becomes part of the binder system. Therefore, the coating for Sample M contains about 21 percent filler. Results for initial tack-up and retained cold glue adhesion in ice appear in Table 5.

**TABLE 5**

| **Sample** | **Initial Tack-Up** | **Retained Adhesion after 2 Days in Ice (% Tear)** |
|---|---|---|
| H | Excellent | 90 |
| L | Poor | 0 |
| M | Excellent | 5 |

As taught by this invention, Table 5 exhibits that the same coating on different substrates yields different retained cold glue adhesion in ice. Not only does the retained adhesion decrease when there is substantially no voided layer adjacent the water- and solvent-resistant coating (Sample L), the initial tack-up may also be less desirable. That is, on a bottling line, the coated sample without the voided sub-layer may be prone to "swim." Similar results might be expected if the voided adhesive-receiving surface were coated with a water- and solvent-resistant polymer that did not contain any filler.

With Sample M, the addition of a small amount of 3-micron hydrophilic porous particles to a water-resistant coating improved initial tack-up. However, even after complete drying, the cold glue adhesion is almost completely lost after two days in ice. In contrast, the hydrophobic clay particles in coating H typically have an average intensity-weighted particle size between 0.6 and 0.9 microns when measured with a Nicomp 370 Sub-micron Particle Analyzer from Pacific Scientific. This means that, compared to a 3-micron particle, at any fixed weight percentage, there would be about one hundred times as many smaller particles. When dried, small voids can occur in the interstitial space between the particles that allow the wet glue to penetrate into the voided sub-layer. Again, inadequate penetration of the glue into the voided adhesive-receiving layer diminishes retained cold glue adhesion in ice. Thus, it is advantageous to have a significant number of small, preferably sub-micron sized, hydrophobic particles in the coating on the voided substrate to allow coating penetration or improved coating-to-surface bonding. To ensure that there are enough particles to permit the penetration or surface bonding of the wet glue, in many applications it is preferable that the coating on the void-containing, adhesive-receiving surface comprise at least 30 percent filler having an average diameter of less than one micron.

### Example 9

To further enhance the processing of plastic labels, it is advantageous to increase the ability of the coated polymer substrate to dissipate static charge build-up. This example demonstrates that the backside coating formulation used to make Sample B (described in Example 2) can be modified with Conductive Polymer 261 RV (polydiallyldimethyl ammonium chloride) from Nalco. Though Sample B initially produces a surface that dissipates static charge reasonably well, surface resistivity of the sample increases as the epoxy components of the coating formulation cure. Therefore, to ensure robust sheeting and dispensing performance, samples containing 0, 1, 2, and 6.5 dry parts 261 RV were prepared using the coating formulation for the adhesive-receiving layer for Sample B as a starting point. To completely cure the epoxy, samples were cured for 15 minutes at 110°C and conditioned for 30 minutes at 50 percent RH before testing. Surface resistivity at 50 percent RH was measured with a Keithley 487 Picoammeter/Voltage Source equipped with a Model 8008 Resistivity Test Fixture with 500 Volts applied to the sample. The following plot illustrates that the surface resistivity (in log ohms per square) varies linearly with the number of dry parts of 261 RV added to the formulation:

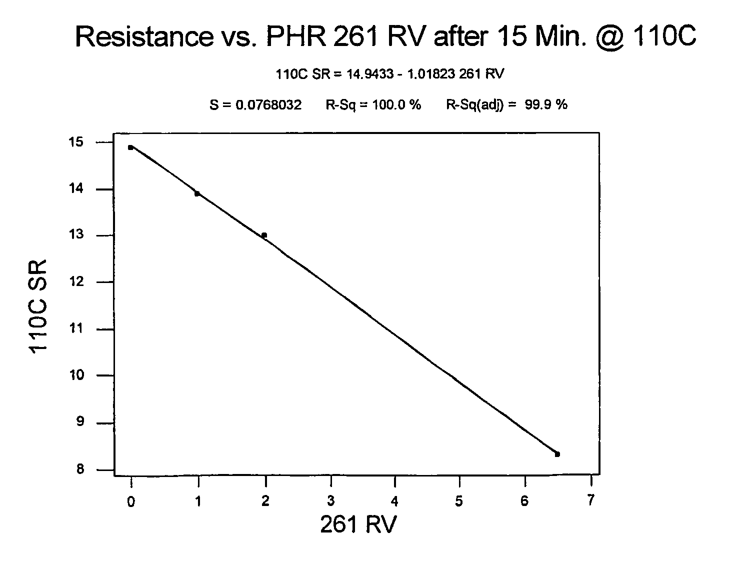

Since 261 RV is a hydrophilic polymer, it is desirable to minimize the amount used. When used, this optional anti-static additive can be added to cationic filled coatings (such as MD125 from Michelman, Inc. and/or the hardened epoxy emulsion described in Example 2) at a preferred level that is between 1 and 3 dry parts. The anti-static coating enhanced sheeting and sheet/label feeding robustness and speed. All samples in this example retained sufficient cold glue adhesion after seven days of ambient drying and another seven days on ice to produce at least 80 percent tear when it was attempted to quickly pull body and neck labels off the bottles.

### Example 10

This example further demonstrates the water resistance of selected coatings used on an adhesive-receiving polymer surface by applying them to the print face and assessing their wet-scratch resistance. Coatings used to make Sample B (described in Example 2) and Sample J (described in Example 7) were selected because they possess desirable properties on the adhesive-receiving surface. These coatings were applied to the print face of 85 LP200. These coated films were printed on a lithographic press with conventional oxidizing lithographic inks and UV-cured over lacquer. After allowing the inks to cure for one week, the labels were attached to plastic one-quart bottles and immersed in water for ten minutes. A printed sample of ExxonMobil LS-447, a wet-scratch resistant label film, was included in this test as a benchmark. The bottles were then placed into an AGR Variable Speed Bottling Line Simulator with the speed setting set at'5'('10'is maximum speed). The line simulator was turned on for one minute at a time. During this time the bottles were rotated so that while being sprayed with water, the labeled bottles bumped into other bottles and the rails and paddles in the simulator. After each minute, the samples were rated on a 1-to-5 scale for damage. Lower numbers are more desirable and a rating of two or lower is considered acceptable. The test comprises five, one-minute cycles. Table 6 tabulates the results.

**TABLE 6**

| AGR Line Simulator Ratings (1 to 5, 1 Best) | | | | | |
|---|---|---|---|---|---|
| **Print-face Coating Type** | **Minutes** | | | | |
| | **1** | **2** | **3** | **4** | **5** |
| LS447 | 1 | 1 | 2 | 3 | 3 |
| B | 1 | 1 | 1 | 1 | 1 |
| J | 1 | 1 | 2 | 3 | 3 |

Table 6 demonstrates that both coatings that yielded excellent properties on the adhesive-receiving layer also exhibited wet-scratch resistance on the print face that equaled or exceeded the wet-scratch resistance of an existing commercial film, due to the excellent wet-scratch resistance of the coating applied to the print-receiving surface. Therefore, this invention also provides for symmetrically coated structures that offer excellent performance properties on both the adhesive-receiving layer and the print face.

## Claims

1. A coated thermoplastic film comprising:
(a) a polymeric substrate comprising:
(i) a first skin layer comprising a polymer, wherein the first skin layer has a first side and a second side and is voided;
(ii) a core layer comprising a polymer, wherein the core layer has a first side and a second side, and the first side of the core layer is adjacent to the second side of the first skin layer; and
(b) a first coating comprising at least a first filler component and a first binder component, the first coating applied to the first side of the first skin layer, wherein at least one of the first filler component and the first binder component is substantially hydrophobic.

2. The coated film according to Claim 1, wherein the polymeric substrate (a) further comprises:
(iii) a second skin layer comprising a polymer, wherein the second skin layer has a first side and a second side, the first side of the second skin layer is adjacent to the second side of the core layer, and the second side of the second skin layer is suitable for a surface treatment selected from the group consisting of flame, corona, plasma, metallization, coating, printing, and combinations thereof.

3. The coated film according to any of the preceding claims, wherein the first filler component comprises at least one of: a) a clay material; b) a natural mineral material; c) a surface-treated natural mineral; d) a synthetic mineral; e) a surface-treated synthetic mineral; f) plastic pigments; and g) thermoplastic pigments.

4. The coated film according to any of the preceding claims, wherein the first filler component comprises at least one of a) a surface-modified clay, b) a surface-modified silica, and c) a surface-modified titanium dioxide.

5. The coated film according to any of the preceding claims, wherein the first binder component comprises at least one polymer of the group consisting of acrylics, urethanes, hardened epoxies, alkyds, polystyrene copolymers, poly(vinylidene chloride) copolymers, butadiene copolymers, vinyl ester copolymers, nitrocellulose, and olefin copolymers.

6. The coated film according to any of the preceding claims, wherein the first coating further comprises:
at least one of organic particles, inorganic particles, silica gel, anti-static material, wetting agents, surfactants, security taggants, pH modifiers, and buffering agents.

7. The coated film according to any of the preceding claims, wherein the first coating is applied to the film at a weight of from about 0.1 g/m² to about 4.0 g/m², or at a weight of from about 0.2 g/m² to about 2.5 g/m², or at a weight of from about 0.8 g/m² to about 2.0 g/m².

8. The coated film according to Claim 2, further comprising:
a second coating comprising at least a second filler component and a second binder component, the second coating applied to the second side of the second skin layer, wherein at least one of the second filler component and the second binder component is substantially hydrophobic.

9. The coated film according to Claim 8, wherein the composition of the second coating is substantially identical to the composition of the first coating.

10. The coated film according to Claim 2, further comprising:
a second coating comprising a second binder component, the second coating applied to the second side of the second skin layer.

11. The coated film according to any of the preceding claims, wherein the second coating is applied to the film at a weight of from about 0.1 g/m² to about 4.0 g/m².

12. The coated film according to Claim 1, wherein the first filler component comprises at least 30 percent by weight of the first coating.

13. The coated film according to any of the preceding claims, wherein the first filler component comprises particles and a majority by number of the particles have an average diameter of from equal to or less than about 1.0 micron to equal to or greater than about 0.05 microns.

14. The coated film according to any of the preceding claims, wherein the first filler material is a hydrophobic material.

15. The coated film according to any of the preceding claims, wherein the first binder is substantially hydrophobic and the first filler material is substantially hydrophilic, the first filler comprising at least one of: a) silica, b) hydrophilic clays, c) barium sulfate, d) calcium carbonate, e) titanium dioxide, f) zinc oxide, g) tin oxide, h) aluminum oxide, i) talc, j) carbon black, and k) another pigment.

16. The coated film according to any of the preceding claims, wherein the first binder further comprises a crosslinker.

17. The coated film according to Claim 2, further comprising:
at least one of a metal layer and an anti-static layer on the second side of the second skin layer.

18. The coated film according to any of the preceding claims, wherein the first skin layer further comprises a voiding agent selected from the group consisting of polyamides, polybutylene terephthalate, polyesters, acetals, acrylic resins, solid preformed glass particles, hollow preformed glass particles, metal particles, ceramic particles, calcium carbonate, cyclic olefin polymers, cyclic olefin copolymers, silicon dioxide, aluminum silicate, magnesium silicate and mixtures thereof.

19. A coated label film for use with a cold glue adhesive, the label film comprising:
(a) a polymeric substrate comprising:
(i) a first skin layer comprising a polymer, wherein the first skin layer has a first side and a second side and is voided;
(ii) a core layer comprising a polymer, wherein the core layer has a first side and a second side, and the first side of the core layer is adjacent to the second side of the first skin layer; and
(b) a first coating comprising at least a first filler component and a first binder component, the coating applied to the first side of the first skin layer, wherein at least one of the first filler component and the first binder component is substantially hydrophobic.

20. The coated film according to any of the preceding claims, wherein the coated film is a coated label film that is useful with a cold glue adhesive.

21. An article labeled with the multilayer film according to any of the preceding claims, the article comprising:
a) a labeling surface on the article;
b) a polymeric label structure having a first side and a second side;
c) a first coating comprising at least a first filler component and a first binder component, the coating applied to the first side of the polymeric label structure, wherein at least one of the first filler component and the first binder component is substantially hydrophobic; and
d) a cold glue adhesive between the labeling surface and the first coating.

22. A method of preparing the coated film according to any of the preceding claims for use as a coated label for use with a cold glue adhesive, comprising the steps of:
a) providing a polymeric label substrate comprising a first side and a second side, wherein the first side is an adhesive-receiving side;
b) coating the first side of the polymeric label substrate with a first coating to form a water- and solvent-resistant coated label substrate;
c) drying the coating on the coated label substrate to form a coated label.

23. A method of labeling an article with a polymeric label made from the coated film according to any of the preceding claims, comprising the steps of:
a) providing an article comprising a labeling surface;
b) providing a polymeric label substrate having a first side and a second side, wherein the first side is an adhesive-receiving side;
c) applying a first coating to the first side of the polymeric label substrate, the first coating comprising at least a first filler component and a first binder component, wherein at least one of the first filler component and the first binder component is substantially hydrophobic;
d) thereafter applying a cold glue adhesive to the first coating; and
e) thereafter applying the polymeric label to the article to produce a labeled article.

## Patentansprüche

1. Beschichtete thermoplastische Folie, die:
(a) ein polymeres Substrat, das:
(i) eine erste Hautschicht, die ein Polymer enthält, wobei die erste Hautschicht eine erste Seite und eine zweite Seite hat und Hohlräume aufweist,
(ii) eine Kernschicht aufweist, die ein Polymer enthält, wobei die Kernschicht eine erste Seite und eine zweite Seite hat und die erste Seite der Kernschicht sich neben der zweiten Seite der ersten Hautschicht befindet, und
(b) eine erste Beschichtung aufweist, die mindestens eine erste Füllstoffkomponente und eine erste Bindemittelkomponente enthält, wobei die erste Beschichtung auf die erste Seite der ersten Hautschicht aufgebracht ist, wobei mindestens eine der ersten Füllstoffkomponente und der ersten Bindemittelkomponente im Wesentlichen hydrophob ist.

2. Beschichtete Folie nach Anspruch 1, bei der das polymere Substrat (a) ferner
(iii) eine zweite Hautschicht aufweist, die ein Polymer enthält, wobei die zweite Hautschicht eine erste Seite und eine zweite Seite hat, wobei sich die erste Seite der zweiten Hautschicht neben der zweiten Seite der Kernschicht befindet und die zweite Seite der zweiten Hautschicht für eine Oberflächenbehandlung ausgewählt aus der Gruppe bestehend aus Flammen, Korona, Plasma, Metallisierung, Beschichten, Bedrucken und Kombinationen davon geeignet ist.

3. Beschichtete Folie nach einem der vorhergehenden Ansprüche, bei der die erste Füllstoffkomponente mindestens eines von a) einem Tonmaterial, b) einem natürlichen Mineralmaterial, c) einem oberflächenbehandelten natürlichen Mineral, d) einem synthetischen Mineral, e) einem oberflächenbehandelten synthetischen Mineral, f) Kunststoffpigmenten und g) thermoplastischen Pigmenten enthält.

4. Beschichtete Folie nach einem der vorhergehenden Ansprüche, bei der die erste Füllstoffkomponente mindestens eines von a) einem oberflächenmodifizierten Ton, b) einem oberflächenmodifizierten Siliciumdioxid und c) einem oberflächenmodifizierten Titandioxid enthält.

5. Beschichtete Folie nach einem der vorhergehenden Ansprüche, bei der die erste Bindemittelkomponente mindestens ein Polymer der Gruppe bestehend aus Acrylharzen, Urethanen, gehärteten Epoxyharzen, Alkydharzen, Polystyrolcopolymeren, Poly(vinylidenchlorid)copolymeren, Butadiencopolymeren, Vinylestercopolymeren, Nitrocellulose und Olefincopolymeren enthält.

6. Beschichtete Folie nach einem der vorhergehenden Ansprüche, bei der die erste Beschichtung ferner
mindestens eines von organischen Teilchen, anorganischen Teilchen, Silikagel, Antistatikmaterial, Benetzungsmitteln, Tensiden, Sicherheitsmarkierungen, pH-Wert-Modifizierungsmitteln und Puffermitteln enthält.

7. Beschichtete Folie nach einem der vorhergehenden Ansprüche, bei der die erste Beschichtung in einem Gewicht von etwa 0,1 g/m² bis etwa 4,0 g/m² oder einem Gewicht von etwa 0,2 g/m² bis etwa 2,5 g/m² oder einem Gewicht von etwa 0,8 g/m² bis etwa 2,0 g/m² auf die Folie aufgebracht ist.

8. Beschichtete Folie nach Anspruch 2, die ferner
eine zweite Beschichtung aufweist, die mindestens eine zweite Füllstoffkomponente und eine zweite Bindemittelkomponente enthält, wobei die zweite Beschichtung auf die zweite Seite der zweiten Hautschicht aufgebracht ist, wobei mindestens eine der zweiten Füllstoffkomponente und der zweiten Bindemittelkomponente im Wesentlichen hydrophob ist.

9. Beschichtete Folie nach Anspruch 8, bei der die Zusammensetzung der zweiten Beschichtung mit der Zusammensetzung der ersten Beschichtung im Wesentlichen identisch ist.

10. Beschichtete Folie nach Anspruch 2, die ferner
eine zweite Beschichtung aufweist, die eine zweite Bindemittelkomponente enthält, wobei die zweite Beschichtung auf die zweite Seite der zweiten Hautschicht aufgebracht ist.

11. Beschichtete Folie nach einem der vorhergehenden Ansprüche, bei der die zweite Beschichtung in einem Gewicht von etwa 0,1 g/m² bis etwa 4,0 g/m² auf die Folie aufgebracht ist.

12. Beschichtete Folie nach Anspruch 1, bei der die erste Füllstoffkomponente mindestens 30 Gew.-% der ersten Beschichtung ausmacht.

13. Beschichtete Folie nach einem der vorhergehenden Ansprüche, bei der die erste Füllstoffkomponente Teilchen enthält und eine Mehrzahl der Teilchen einen durchschnittlichen Durchmesser gleich oder kleiner als etwa 1,0 µm bis gleich oder größer als etwa 0,05 µm hat.

14. Beschichtete Folie nach einem der vorhergehenden Ansprüche, bei der das erste Füllstoffmaterial ein hydrophobes Material ist.

15. Beschichtete Folie nach einem der vorhergehenden Ansprüche, bei der das erste Bindemittel im Wesentlichen hydrophob ist und das erste Füllstoffmaterial im Wesentlichen hydrophil ist, wobei der erste Füllstoff mindestens eines von a) Siliciumdioxid, b) hydrophilen Tonen, c) Bariumsulfat, d) Calciumcarbonat, e) Titandioxid, f) Zinkoxid, g) Zinnoxid, h) Aluminiumoxid, i) Talkum, j) Ruß und k) anderem Pigment enthält.

16. Beschichtete Folie nach einem der vorhergehenden Ansprüche, bei der die erste Beschichtung ferner ein Vernetzungsmittel enthält.

17. Beschichtete Folie nach Anspruch 2, die ferner
mindestens eine von einer Metallschicht und einer Antistatikschicht auf der zweiten Seite der zweiten Hautschicht umfasst.

18. Beschichte Folie nach einem der vorhergehenden Ansprüche, bei der die erste Hautschicht ferner einen Hohlraumbildner ausgewählt aus der Gruppe bestehend aus Polyamiden, Polybutylenterephthalat, Polyestern, Acetalen, Acrylharzen, massiven vorgebildeten Glasteilchen, hohlen vorgebildeten Glasteilchen, Metallteilchen, Keramikteilchen, Calciumcarbonat, Polymeren cyclischer Olefine, Copolymeren cyclischer Olefine, Siliciumdioxid, Aluminiumsilikat, Magnesiumsilikat und Mischungen davon enthält.

19. Beschichtete Etikettenfolie zur Verwendung mit einem Kaltleimkleber, wobei die Etikettenfolie
(a) ein polymeres Substrat, das:
(i) eine erste Hautschicht, die ein Polymer enthält, wobei die erste Hautschicht eine erste Seite und eine zweite Seite hat und Hohlräume aufweist,
(ii) eine Kernschicht aufweist, die ein Polymer enthält, wobei die Kernschicht eine erste Seite und eine zweite Seite hat und die erste Seite der Kernschicht sich neben der zweiten Seite der ersten Hautschicht befindet, und
(b) eine erste Beschichtung aufweist, die mindestens eine erste Füllstoffkomponente und eine erste Bindemittelkomponente enthält, wobei die Beschichtung auf die erste Seite der ersten Hautschicht aufgebracht ist, wobei mindestens eine der ersten Füllstoffkomponente und der ersten Bindemittelkomponente im Wesentlichen hydrophob ist.

20. Beschichtete Folie nach einem der vorhergehenden Ansprüche, die eine beschichtete Etikettenfolie ist, die mit einem Kaltleimkleber brauchbar ist.

21. Gegenstand, der mit der Mehrschichtfolie gemäß einem der vorhergehenden Ansprüche etikettiert ist, und
a) eine Etikettieroberfläche an dem Gegenstand,
b) eine polymere Etikettenstruktur mit einer ersten Seite und einer zweiten Seite,
c) eine erste Beschichtung, die mindestens eine erste Füllstoffkomponente und eine erste Bindemittelkomponente enthält, wobei die Beschichtung auf die erste Seite der polymeren Etikettenstruktur aufgebracht ist, wobei mindestens eine der ersten Füllstoffkomponente und der ersten Bindemittelkomponente im Wesentlichen hydrophob ist, und
d) einen Kaltleimkleber zwischen der Etikettieroberfläche und der ersten Beschichtung aufweist.

22. Verfahren zur Herstellung der beschichteten Folie nach einem der vorhergehenden Ansprüche zur Verwendung als beschichtetes Etikett zur Verwendung mit einem Kaltleimkleber, bei dem
a) ein polymeres Etikettsubstrat bereitgestellt wird, das eine erste Seite und eine zweite Seite aufweist, wobei die erste Seite eine Klebstoff aufnehmende Seite ist,
b) die erste Seite des polymeren Etikettensubstrats mit einer ersten Beschichtung beschichtet wird, um ein gegen Wasser und Lösungsmittel beständiges, beschichtetes Etikettensubstrat zu bilden,
c) die Beschichtung auf dem beschichteten Etikettensubstrat getrocknet wird, um ein beschichtetes Etikett zu bilden.

23. Verfahren zum Etikettieren eines Gegenstands mit einem polymeren Etikett, das aus der beschichteten Folie gemäß einem der vorhergehenden Ansprüche hergestellt ist, bei dem
a) ein Gegenstand bereitgestellt wird, der eine Etikettieroberfläche aufweist,
b) ein polymeres Etikettsubstrat mit einer ersten Seite und einer zweiten Seite bereitgestellt wird, wobei die erste Seite eine Klebstoff aufnehmende Seite ist,
c) eine erste Beschichtung auf die erste Seite des polymeren Etikettensubstrats aufgebracht wird, wobei die erste Beschichtung mindestens eine erste Füllstoffkomponente und eine erste Bindemittelkomponente enthält, wobei mindestens eine der ersten Füllstoffkomponente und der ersten Bindemittelkomponente im Wesentlichen hydrophob ist,
d) anschließend ein Kaltleimkleber auf die erste Beschichtung aufgebracht wird, und
e) anschließend das polymere Etikett auf den Gegenstand aufgebracht wird, um einen etikettierten Gegenstand zu produzieren.

## Revendications

1. Film thermoplastique recouvert comprenant :
(a) un substrat polymère comprenant :
(i) une première couche externe comprenant un polymère, dans lequel la première couche externe possède un premier côté et un second côté et est creuse ;
(ii) une couche centrale comprenant un polymère, dans lequel la couche centrale possède un premier côté et un second côté, et le premier côté de la couche centrale est adjacent au second côté de la première couche externe ; et
(b) un premier revêtement comprenant au moins un premier composant de charge et un premier composant liant, le premier revêtement étant appliqué sur le premier côté de la première couche externe, dans lequel au moins un parmi le premier composant de charge et le premier composant liant est essentiellement hydrophobe.

2. Film recouvert selon la revendication 1, dans lequel le substrat polymère (a) comprend en outre :
(iii) une seconde couche externe comprenant un polymère, dans lequel la seconde couche externe possède un premier côté et un second côté, le premier côté de la seconde couche externe est adjacent au second côté de la couche centrale, et le second côté de la seconde couche externe est approprié pour un traitement de surface choisi parmi le groupe constitué d'une flamme, d'une décharge corona, d'une décharge plasma, d'une métallisation, d'un revêtement, d'une impression, et de combinaisons de ceux-ci.

3. Film recouvert selon l'une quelconque des revendications précédentes, dans lequel le premier composant de charge comprend au moins un parmi : a) un matériau argileux ; b) un matériau minéral naturel ; c) un minéral naturel à surface traitée ; d) un minéral synthétique ; e) un minéral synthétique à surface traitée ; f) des pigments plastiques ; et g) des pigments thermoplastiques.

4. Film recouvert selon l'une quelconque des revendications précédentes, dans lequel le premier composant de charge comprend au moins un parmi a) une argile à surface modifiée, b) une silice à surface modifiée et c) du dioxyde de titane à surface modifiée.

5. Film recouvert selon l'une quelconque des revendications précédentes, dans lequel le premier composant liant comprend au moins un polymère parmi le groupe constitué des acryliques, des uréthanes, des époxys durcis, des alkydes, des copolymères de polystyrène, des copolymères de poly(chlorure de vinylidène), des copolymères de butadiène, des copolymères d'ester vinylique, de la nitrocellulose et des copolymères d'oléfines.

6. Film recouvert selon l'une quelconque des revendications précédentes, dans lequel le premier revêtement comprend en outre :
au moins un élément parmi des particules organiques, des particules inorganiques, un gel de silice, un matériau antistatique, des agents mouillants, des agents tensioactifs, des traceurs de sécurité, des régulateurs de pH et des agents tampons.

7. Film recouvert selon l'une quelconque des revendications précédentes, dans lequel le premier revêtement est appliqué sur le film à un poids d'environ 0,1 g/m² à environ 4,0 g/m², ou a un poids d'environ 0,2 g/m² à environ 2,5 g/m² ou à un poids d'environ 0,8 g/m² à environ 2,0 g/m².

8. Film recouvert selon la revendication 2, qui comprend en outre :
un second revêtement comprenant au moins un second composant de charge et un second composant liant, le second revêtement étant appliqué sur le second côté de la seconde couche externe, dans lequel au moins un parmi le second composant de charge et le second composant liant est essentiellement hydrophobe.

9. Film recouvert selon la revendication 8, dans lequel la composition du second revêtement est essentiellement identique à la composition du premier revêtement.

10. Film recouvert selon la revendication 2, qui comprend en outre :
un second revêtement comprenant un second composant liant, le second revêtement étant appliqué sur le second côté de la seconde couche externe.

11. Film recouvert selon l'une quelconque des revendications précédentes, dans lequel le second revêtement est appliqué sur le film à un poids d'environ 0,1 g/m² à environ 4,0 g/m².

12. Film recouvert selon la revendication 1, dans lequel le premier composant de charge constitue au moins 30 % en poids du premier revêtement.

13. Film recouvert selon l'une quelconque des revendications précédentes, dans lequel le premier composant de charge est constitué de particules et une majorité en nombre des particules possèdent un diamètre moyen égal ou inférieur à environ 1,0 micron à égal ou supérieur à environ 0,05 micron.

14. Film recouvert selon l'une quelconque des revendications précédentes, dans lequel le premier matériau de charge est un matériau hydrophobe.

15. Film recouvert selon l'une quelconque des revendications précédentes, dans lequel le premier composant liant est essentiellement hydrophobe et le premier matériau de charge est essentiellement hydrophile, le premier matériau de charge comprenant au moins un parmi : a) la silice, b) des argiles hydrophiles, c) du sulfate de baryum, d) du carbonate de calcium, e) du dioxyde de titane, f) de l'oxyde de zinc, g) de l'oxyde d'étain, h) de l'oxyde d'aluminium, i) du talc, j) du noir de carbone et k) un autre pigment.

16. Film recouvert selon l'une quelconque des revendications précédentes, dans lequel le premier liant comprend en outre un agent de réticulation.

17. Film recouvert selon la revendication 2, qui comprend en outre :
au moins une couche métallique et une couche antistatique sur le second côté de la seconde couche externe.

18. Film recouvert selon l'une quelconque des revendications précédentes, dans lequel la première couche externe comprend en outre un agent de formation de creux choisi parmi le groupe constitué de polyamides, du téréphtalate de polybutylène, de polyesters, d'acétals, de résines acryliques, de particules de verre préformées solides, de particules de verre préformées creuses, de particules métalliques, de particules de céramique, du carbonate de calcium, de polymères d'oléfines cycliques, de copolymères d'oléfines cycliques, du dioxyde de silicium, du silicate d'aluminium, du silicate de magnésium et de mélanges de ceux-ci.

19. Film recouvert pour étiquette pour utilisation avec un adhésif à colle froide, le film pour étiquette comprenant :
(a) un substrat polymère comprenant :
(i) une première couche externe comprenant un polymère, dans lequel la première couche externe possède un premier côté et un second côté et est creuse ;
(ii) une couche centrale comprenant un polymère, dans lequel la couche centrale possède un premier côté et un second côté, et le premier côté de la couche centrale est adjacent au second côté de la première couche externe ; et
(b) un premier revêtement comprenant au moins un premier composant de charge et un premier composant liant, le premier revêtement étant appliqué sur le premier côté de la première couche externe, dans lequel au moins un parmi le premier composant de charge et le premier composant liant est essentiellement hydrophobe.

20. Film recouvert selon l'une quelconque des revendications précédentes, dans lequel le film recouvert est un film recouvert pour étiquette qui est utile avec un adhésif à colle froide.

21. Article étiqueté avec le film multicouche selon l'une quelconque des revendications précédentes, l'article comprenant :
a) une surface d'étiquetage sur l'article ;
b) une structure d'étiquette polymère ayant un premier côté et un second côté ;
c) un premier revêtement comprenant au moins un premier composant de charge et un premier composant liant, le revêtement étant appliqué sur le premier côté de la structure de l'étiquette polymère, dans lequel au moins un parmi le premier composant de charge et le premier composant liant est essentiellement hydrophobe ; et
d) un adhésif à colle froide entre la surface d'étiquetage et le premier revêtement.

22. Procédé de préparation du film recouvert selon l'une quelconque des revendications précédentes pour utilisation comme une étiquette recouverte pour utilisation avec un adhésif à colle froide, comprenant les étapes consistant à :
a) fournir un substrat d'étiquette polymère comprenant un premier côté et un second côté, dans lequel le premier côté est un côté récepteur pour l'adhésif ;
b) revêtir le premier côté du substrat d'étiquette polymère avec un premier revêtement pour former un substrat d'étiquette recouverte résistante à l'eau et aux solvants ;
c) sécher le revêtement sur le substrat d'étiquette recouverte pour former une étiquette recouverte.

23. Procédé d'étiquetage d'un article avec une étiquette polymère fabriqué à partir du film recouvert conformément à l'une quelconque des revendications précédentes, comprenant les étapes consistant à :
a) fournir un article comprenant une surface d'étiquetage ;
b) fournir un substrat d'étiquette polymère comprenant un premier côté et un second côté, dans lequel le premier côté est un côté récepteur pour l'adhésif ;
c) appliquer un premier revêtement sur le premier côté du substrat d'étiquette polymère, le premier revêtement comprenant au moins un premier composant de charge et un premier composant liant, dans lequel au moins un parmi le premier composant de charge et le premier composant liant est essentiellement hydrophobe ;
d) appliquer par la suite un adhésif à colle froide sur le premier revêtement ; et
e) appliquer par la suite l'étiquette polymère sur l'article pour produire un article étiqueté.
